(19) Europäisches Patentamt
European Patent Office
Office européen des brevets

(11) Veröffentlichungsnummer: **0 144 704**
**B1**

# (12) EUROPÄISCHE PATENTSCHRIFT

(45) Veröffentlichungstag der Patentschrift: **16.12.87**

(51) Int. Cl.⁴: **C 09 B 62/022**, D 06 P 3/10, D 06 P 3/66

(21) Anmeldenummer: **84113005.7**

(22) Anmeldetag: **29.10.84**

(54) **Reaktivfarbstoffe.**

(30) Priorität: **08.11.83 DE 3340274**

(43) Veröffentlichungstag der Anmeldung: **19.06.85 Patentblatt 85/25**

(45) Bekanntmachung des Hinweises auf die Patenterteilung: **16.12.87 Patentblatt 87/51**

(84) Benannte Vertragsstaaten: **CH DE FR GB LI**

(56) Entgegenhaltungen:
**DE-A-1 419 791**
**FR-A-1 263 438**

**CHEMICAL ABSTRACTS, Band 95, Nr. 2, Juli 1981, Seite 71, Nr. 26598n, Columbus, Ohio, US**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Herd, Karl Josef, Dr., Buchholzstrasse 32, D-5000 Köln 80 (DE)**
Erfinder: **Michna, Martin, Dr., Silesiusstrasse 74, D-5000 Köln 80 (DE)**

**EP 0 144 704 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft neue Reaktivfarbstoffe der allgemeinen Formel

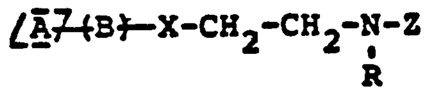 (I)

worin

A = Rest eines organischen Farbstoffs der Mono- oder Polyazo-, Metallkomplexazo-, Anthrachinon-, Phthalocyanin-, Formazan-, Dioxazin-, Xanthen- oder Phenazin-Reihe,

B = direkte Bindung zwischen A und X oder Brückenglied,

X = S, SO oder $SO_2$

R = H, gegebenenfalls substituiertes $C_1$-$C_4$-Alkyl, gegebenenfalls substituiertes $C_2$-$C_6$-Alkenyl oder gegebenenfalls substituierter Benzylaminrest,

Z = fluorhaltiger faserreaktiver Rest.

In Formel (1) kommt als Brückenglied B vorzugsweise ein Brückenglied der Struktur (2) bis (5) in Frage:

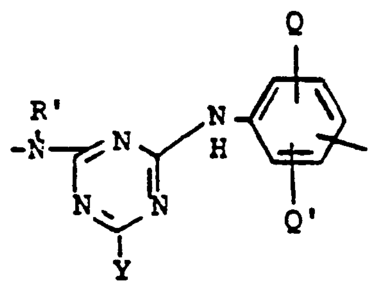

(2)

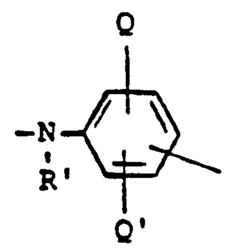

(3)

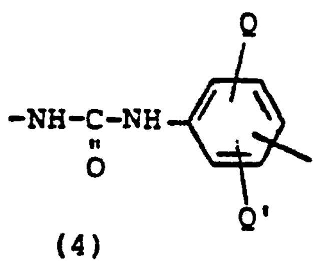

(4)

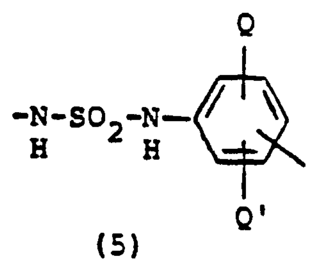

(5)

wobei in den Formeln (2) bis (5) jeweils die Aminofunktion an ein Kohlenstoffatom eines aromatischcarbocyclischen oder eines aromatisch heterocyclischen Ringes im Chromophor A und mit der freien Funktion des Phenylsystems an X gebunden ist.

In den Formeln (2) bis (5) gilt:

R' = H, gegebenenfalls substituiertes Alkyl oder gegebenenfalls substituiertes Aryl,

Y = OH, Cl, F, gegebenenfalls substituiertes $C_1$-$C_4$-Mercaptyl, gegebenenfalls substituiertes $C_1$-$C_4$-Alkoxy, $SO_3H$, NHR',

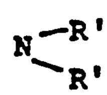

oder gegebenenfalls substituiertes Phenoxy,

Q und Q' = unabhängig voneinander H, OH, Halogen, $SO_3H$, COOH, gegebenenfalls substituiertes $C_1$-$C_4$-Alkyl, gegebenenfalls substituiertes $C_1$-$C_4$-Alkoxy.

Bevorzugt sind Reaktivfarbstoffe der Formel

$$[A]-(B)-SO_2-CH_2-CH_2-\underset{R}{N}-Z \qquad (6)$$

wobei A, B, R und Z die unter Formel (1) angegebenen Bedeutungen haben.

Weiterhin bevorzugt sind Farbstoffe der Formel

$$[A]-X-CH_2-CH_2-\underset{R}{N}-Z \qquad (7)$$

wobei A, X, R und Z die unter Formel (1) angegebene Bedeutung besitzen.

Weiterhin bevorzugt sind Azo-Reaktivfarbstoffe der Formel

$$[K-N=N-D]-(B)-X-CH_2-CH_2-\underset{R}{N}-Z \qquad (8)$$

worin

K = Rest einer Kupplungskomponente der Benzol-, Naphthalin- oder der heterocyclischen Reihe und
D = Rest einer Diazokomponente der Benzol- oder Naphthalinreihe und worin B, X, R und Z die unter Formel (1) genannten Bedeutung haben.

Weiterhin bevorzugt sind Azo-Reaktivfarbstoffe der Formel

$$[K-N=N-D]-(B)-SO_2-CH_2-CH_2-\underset{R}{N}-Z \qquad (9)$$

worin K und D die unter Formel (8) und B, R und Z die unter Formel (1) angegebene Bedeutung haben.

Als Reste A eines organischen Farbstoffes kommen vorzugsweise folgende chromophore Systeme (a) bis (m) in Betracht:

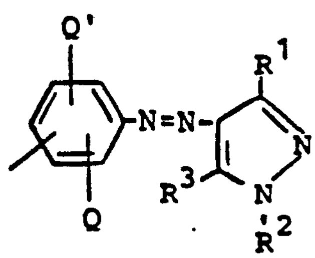

(a)

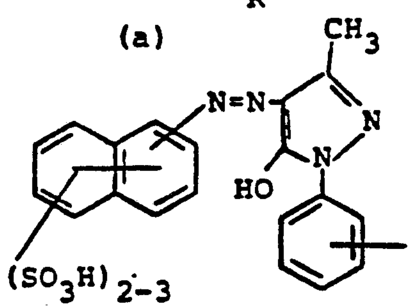

(b)

wobei in (a) und (b) Q und Q' die unter den Formeln (2) bis (5) angegebenen Bedeutungen besitzen,
$R^1 = CH_3$, COOH, COO(Alkyl-$C_1$-$C_4$), $CONH_2$,
$R^2 = H$, gegebenenfalls substituiertes Alkyl, gegebenenfalls substituiertes Aryl,
$R^3 = OH$ oder $NH_2$

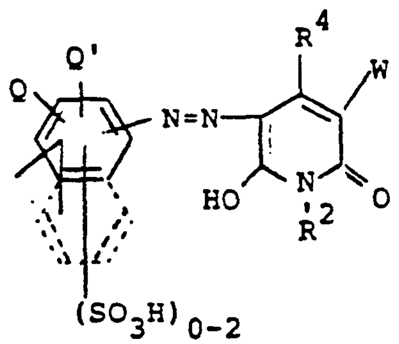

(c)

wobei in (c) Q und Q' die unter den Formeln (2) bis (5) angegebenen Bedeutungen besitzen,
$R^4 = H$, $CH_3$, COOH, $CH_2$-$SO_3H$,
W = H, CN, $CONH_2$, $SO_3H$, $SO_2CH_3$, $CO_2SO_3H$, $CH_2$-$CO_2H$, Halogen, $C_1$-$C_3$-Alkyl;

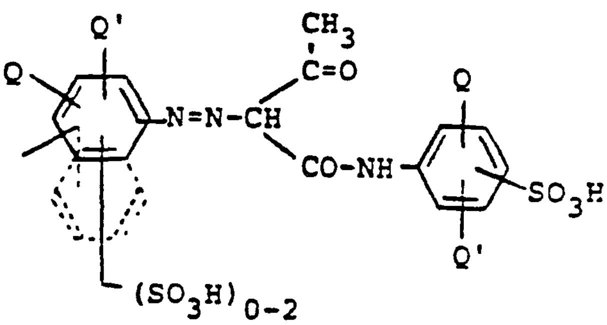

(d)

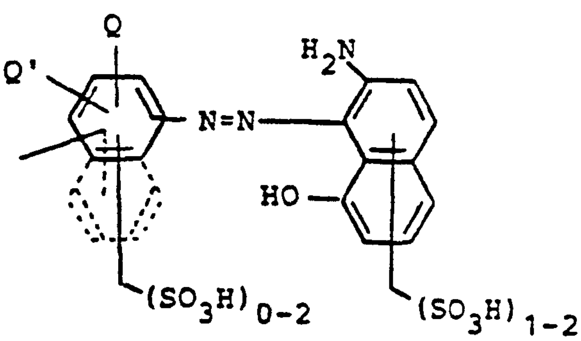

(e)

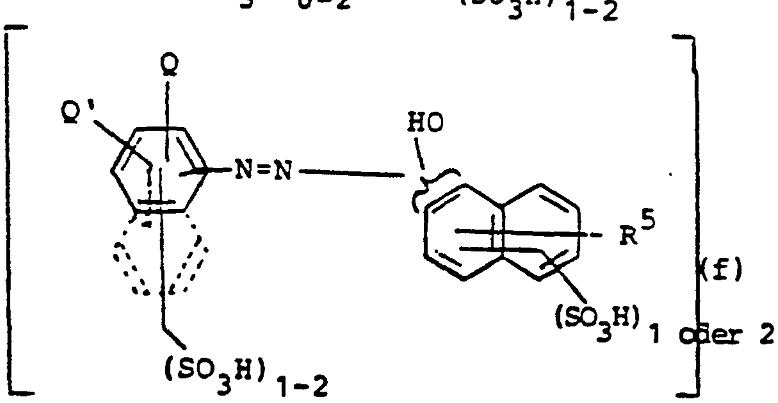

(f)

wobei in (d) bis (f) Q und Q' die unter den Formeln (2) bis (5) angegebenen Bedeutungen besitzen,

$R^5$ = H, Cl, Br, Alkoxy, OH, gegebenenfalls substituiertes Amino, wie z. B. Acylamino, Benzoylamino,

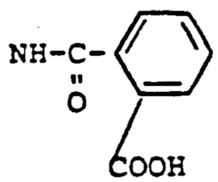 , 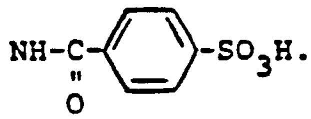

Falls in Formel (f) Q für OH in ortho-Stellung zur Azofunktion steht, sind auch die 1:1 Metallkomplexfarbstoffe (besonders die $Cu^{2+}$-Komplexe) der Struktur (f) von Relevanz.

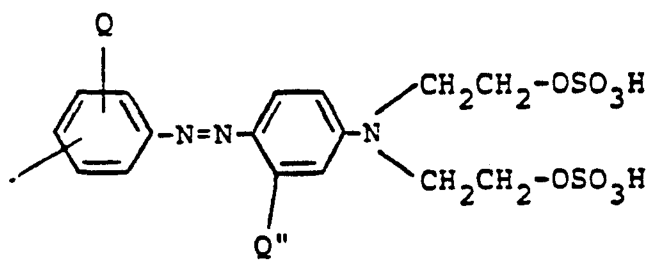

(g)

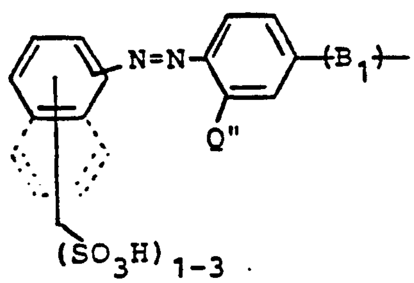

(h)

wobei Q die unter den Formeln (2) bis (5) angegebene Bedeutung besitzt,

Q' = H, $CH_3$, $NHCOCH_3$, $NHCONH_2$, $NHSO_2CH_3$ und wobei $B_1$ für ein Brückenglied der Formeln (2) bis (5) steht.

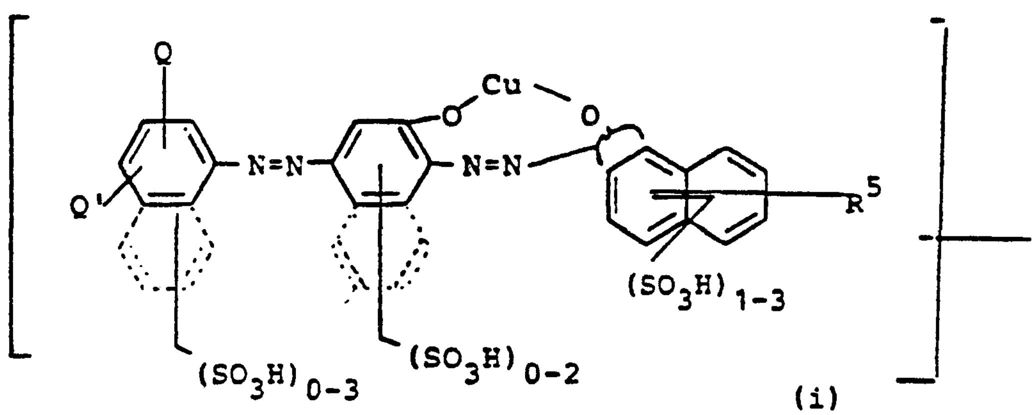

(i)

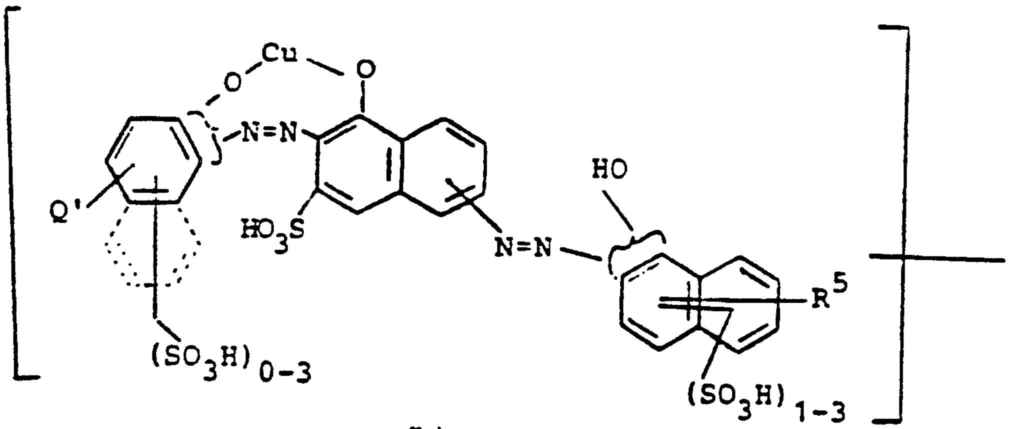

(k)

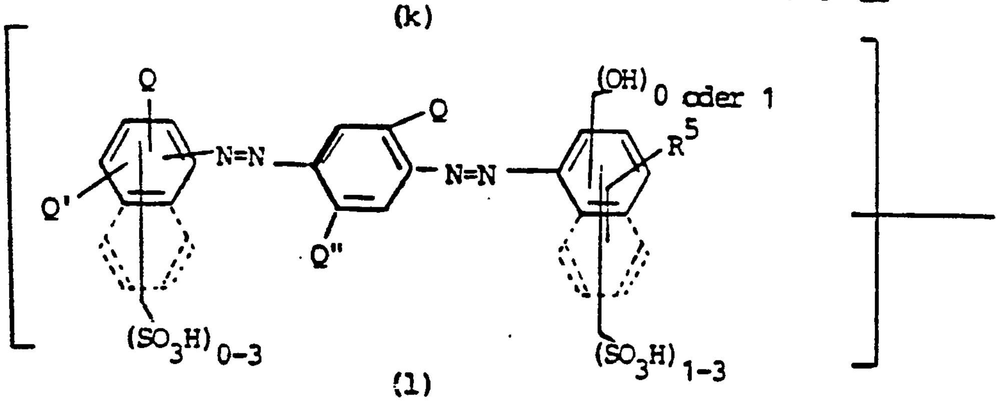

(l)

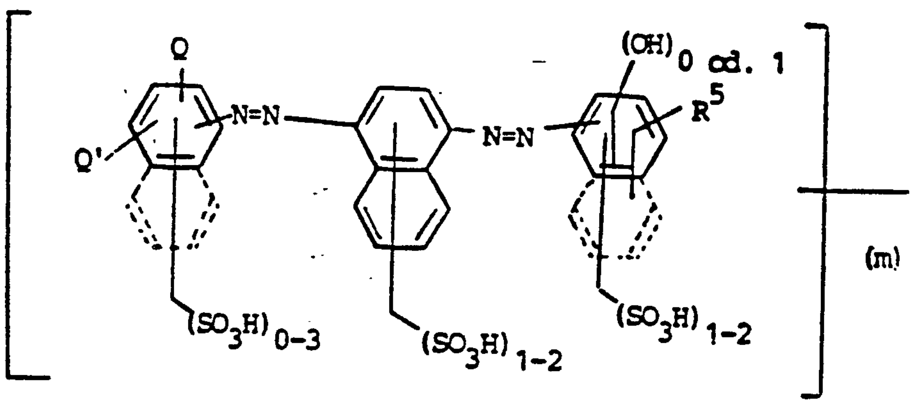

(m)

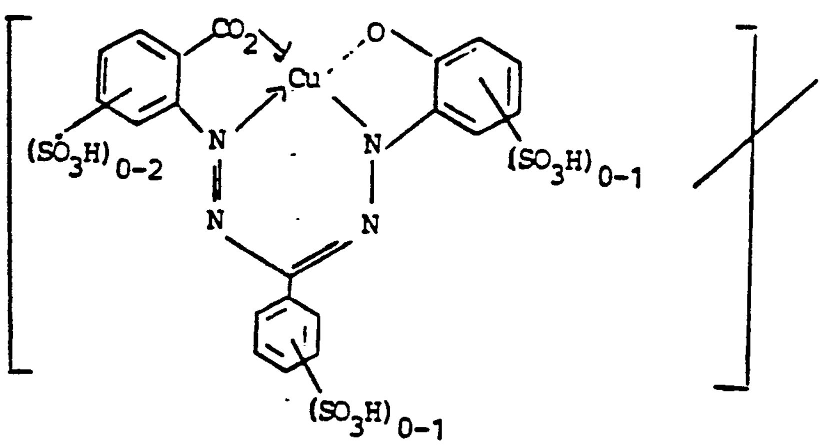

(n)

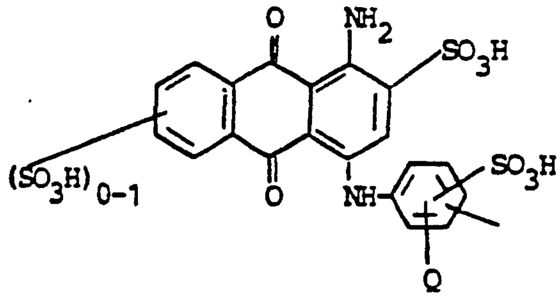

(o)

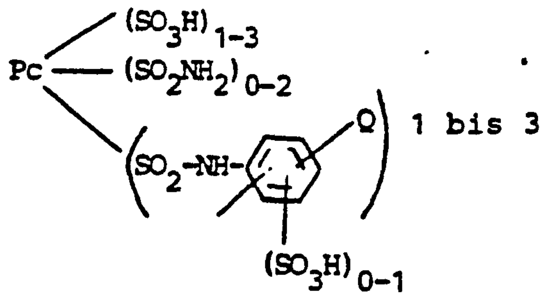

(p)

wobei für die Formeln (i) bis (p) gilt Q und Q': siehe die unter den Formeln (2) bis (5) angegebene Bedeutung
$R^5$: siehe die unter Formel (f) angegebene Bedeutung
Pc = $Cu^{2+}$ oder $Ni^{2+}$-Phthaloocyaninrest, wobei die Gesamtzahl der Substituenten am Pc-Gerüst 4 beträgt.

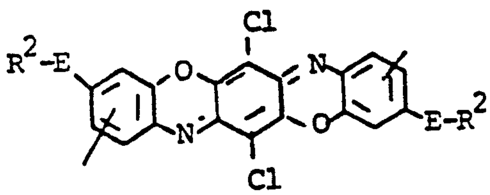

(q)

wobei E = NH, O, S und
$R^2$ = H, gegebenenfalls substituiertes Alkyl oder gegebenenfalls substituiert. Aryl bedeuten.

Als Substituenten der $C_1$-$C_4$-Alkylreste, $C_2$-$C_5$-Alkenyl-reste sowie Benzylaminreste R kommen vorzugsweise in Frage: OH, Halogen (insbes. Chlor), $SO_3H$, $OSO_3H$, COOH, $OCH_3$, $OC_2H_5$.

Als Reste R seien beispielhaft aufgeführt:
H, $CH_3$, $C_2H_5$, -n-$C_3H_7$, -iso-$C_3H_7$, -n-$C_4H_9$, -iso-$C_4H_9$, $-CH_2-CH=CH_2$, $-CH_2CH_2-OH$, $-CH_2CH_2-Cl$, $-CH_2CH_2-SO_3H$, $-CH_2CH_2-OSO_3H$, $-CH_2-CO_2H$, $-CH_2CH_2-CO_2H$, $-CH(CH_3)-CO_2H$, $-CH_2-CH_2-OCH_3$, $-CH_2-CH(OH)-CH_3$, $-CH_2-CH_2-CH(OH)-CH_3$, $-CH_2CH_2CH_2-CO_2H$, $-CH_2$

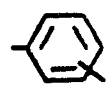

($SO^3H$) 1 oder 2.

Als Z = fluorhaltige faserreaktive Reste kommen vorzugsweise die einwertigen Reste von Fluortriazin und Fluor-pyrimidin-Verbindungen in Frage. Als derartige Verbindungen seien die folgenden aufgeführt:

2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2',5', disulfophenyl)-amino-triazin, 2,4-Difluor-6-(6'-sulfonaphthyl-2')-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difluor-6-(2'-chlor-4'-sulfophenyl)-amino-triazin, 2,4-Di-fluor-6-(2'-chlor-5'-sulfophenyl)-amino-triazin, 2,4-Difluor-6-(2'-methoxy-4'-sulfophenyl)-amino-triazin, 2,4-Dilfuor-6-(o-, m-, p-carboxylphenyl)-amino-triazin, 2,4-Difluor-6-(N-methyl-phenyl)-amino-triazin, 2,4-Difluor-6-(N-ethyl-phenyl)amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzyl-amino-triazin, 2,4-Difluor-6-β-phenylethyl-amino-triazin, 2,4-Difluor-6-(x-sulfo-benzyl)-amino-triazin, 2,4-Difluor-6-(2',4'-disulfophenyl)-amino-triazin, 2,4-Difluor-6-(3',5'-disulfophenyl)-amino-triazin, 2,4-Difluor-6-(2'-carboxy-4'-sulfo-phenyl)-amino-triazin, 2,4-Difluor-6-(2',5'-disulfo-4-methoxyphenyl)-amino-triazin, 2,4-Difluor-(2'-methyl-4',6'-disulfophenyl)-amino-triazin, 2,4-Difluor-(6',8'-disulfonaphthyl-(2')-amino-triazin, 2,4-Difluor-(4',8'-disulfonaphthyl-(2'))-amino-triazin, 2,4-Difluor-(4',6',8'-trisulfo-naphthyl-(2'))-amino-triazin, 2,4-Difluor-(3',6',8'-trisulfonaphthyl-(2'))-amino-triazin, 2,4-Difluor-(3',6'-disulfonaphthyl-(1'))-amino-triazin, 2,4-Difluor-6-amino-triazin, 2,4-Difluor-6-methylamino-triazin, 2,4-Difluor-6-ethylamino-triazin, 2,4-Difluor-6-methoxyethoxy-triazin, 2,4-Difluor-6-methoxy-ethyl-amino-triazin, 2,4-Difluor-6-dimethylamino-triazin, 2,4-Difluor-6-diethylamino-triazin, 2,4-Difluor-6-isopropylamino-triazin, Tetrafluorpyrimidin, Trifluorpyrimidin, Difluorpyrimidin; 2,4-Difluor-6-methyl-pyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Tri-fluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlor-pyrimidin, 2,6-Difluor-5-chlorpyrimidin, 2,4,6-Trifluor-5-methylpyrimidin, 4-Dichlormethyl-5-chlor-2,6-difluorpyrimidin, 5-Chlor-4-trichlormethyl-2,6-difluorpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimdin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrmidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxypyrimidin, 2,4-Difluor-6-phenyl-pyrimidin, 2,4-Difluor-6-cyanpyrimdin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluormethyl-2,4-difluorpyrimidin.

Die Reaktivfarbstoffe der Formel (1) können hergestellt werden, indem man Farbstoffe der Formel

$$[A]-(B)-X-CH_2-CH_2-NH-R \qquad (10)$$

mit reaktiven Fluorverbindungen der Formel

$$Z - F \qquad (11)$$

nach an sich bekannten Bedingungen kondensiert,

wobei A, B, X, R und Z die unter Formel (1) angegebene Bedeutung besitzen.

Die Reaktivfarbstoffe der Formeln (8) und (9) können hergestellt werden, indem man Azoverbindungen der Formel

$$[K-N=N-D]-(B)-X-CH_2-CH_2-NHR \qquad (12)$$

mit reaktiven Fluorverbindungen der Formel

$$Z - F \qquad (11)$$

kondensiert oder indem man Aminoverbindungen der Formel

$$H_2N-[D]-(B)-X-CH_2-CH_2-\underset{\displaystyle R}{\overset{}{N}}-Z \qquad (18)$$

diazotiert und auf Kupplungskomponenten K-H kuppelt,

oder aber indem man Aminoverbindungen $D-NH_2$ diazotiert und auf Kupplungskomponenten der Formel

$$[H-K]-(B)-X-CH_2-CH_2-\underset{\displaystyle R}{\overset{}{N}}-Z \qquad (14)$$

kuppelt,

wobei in den Formeln (12) bis (14) K, D, B, X, R und Z die unter den Formeln (8) und (9) angegebenen Bedeutungen besitzen.

Die Darstellung der Farbstoffvor- und zwischenprodukte, wie z. B. Verbindungen der Formel (10) und (12) bis (14), kann wie folgt durchgeführt werden.

Durch Alkylierung der Thiophenole oder Benzolsulfinate der Struktur (15) und (16)

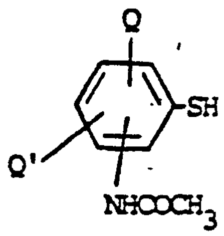

(15)

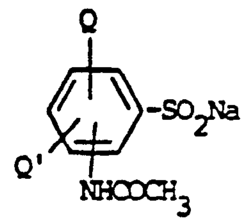

(16)

mit Verbindungen der Formel $RNH\text{-}CH_2\text{-}CH_2\text{-}OSO_3H$ oder

$R\overset{\oplus}{N}H_2\text{-}CH_2\text{-}CH_2\text{-}Cl\ Cl^{\ominus}$, gegebenenfalls nachfolgende Oxidation mit z. B. $H_2O_2$ und anschließende Verseifung,

oder aber durch Alkylierung der Nitrothiophenole (17) bzw. Nitrobenzolsulfinate (18)

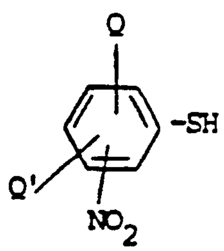

(17)

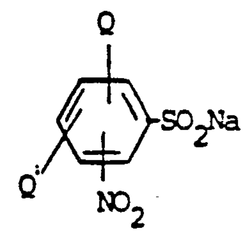

(18)

mit den bereits genannten Verbindungen $RNH\text{-}CH_2CH_2\text{-}OSO_3H$ oder

$R\overset{\oplus}{N}H_2\text{-}CH_2\text{-}CH_2\text{-}Cl\ Cl^{\ominus}$ und nachfolgende Reduktion der Nitrofunktion lassen sich die Anilinderivate (19) bis (21) herstellen,

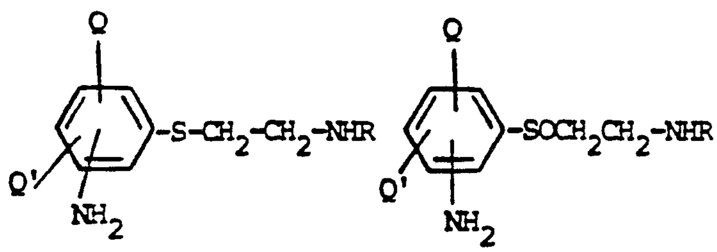

(19) (20)

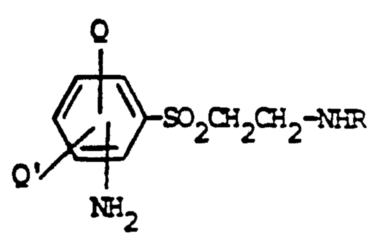

(21)

wobei Q und Q' die unter Formel (1) genannte Bedeutung besitzen.

Andere konventionelle Syntheseverfahren für diese Anilinderivate (19) bis (21) sind z. B. in
J. Chem. Soc. [London] 1945, 826;
J. Org. Chem. 15, 413 (1950);
Biochem. J. 39, 85 (1945) beschrieben.

Die aufgeführten einzelnen Syntheseschritte lassen sich auch auf die Darstellung von entsprechenden Naphthylaminderivaten der Formel (22) anwenden.

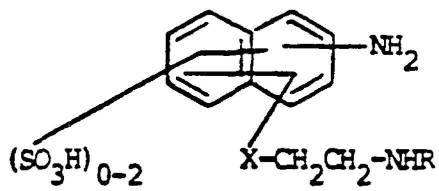

$X = S, SO, SO_2$

(22)

Eine weitere Synthesemöglichkeit für die Aminoverbindungen (19) bis (22) mit $X=SO_2$ besteht in der Umsetzung von Verbindungen der Struktur (23) bis (26), wie sie z. B. in den Deutschen Offenlegungsschriften 1 943 904, 2 142 727, 2 142 728, 2 748 975 bzw. der japanischen Patentanmeldung 43501/1973 genannt werden,

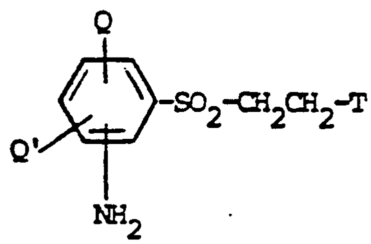

(23)

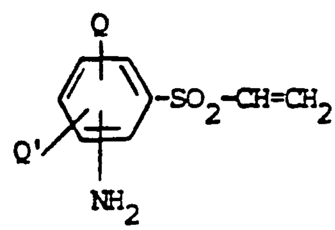

(24)

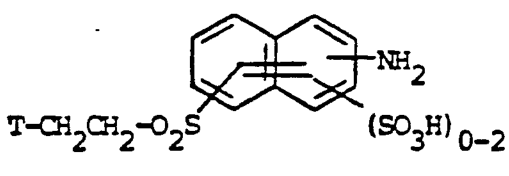

(25)

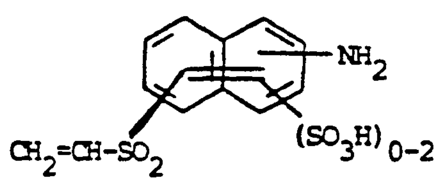

(26)

$$T = OH,\ Cl,\ Br,\ OSO_3H,\ SSO_3H,\ OPO(OH)_2,\ O-\overset{\overset{O}{\|}}{C}-CH_3,\ O-\overset{\overset{O}{\|}}{C}OCH_3$$

mit einem Überschuß an Ammoniak oder primären aliphatischen Aminen der Formel $RNH_2$ bei 20-100° C. Dieses Syntheseprinzip ist z. B. aus der DOS 1 943 904 (Bsp. 4) sowie der veröffentlichten japanischen Patentanmeldung 07929/1973 [CA $\underline{84}$: 148968c (1973)] bekannt.

Durch Diazotieren dieser Amino-Verbindungen (19) bis (22) und nachfolgende Kupplung auf Kupplungskomponenten K-H lassen sich Farbstoffvorprodukte der Formel (10) und (12) herstellen.

Diese chromophoren Vorprodukte (10) und (12) mit $X=SO_2$ sind auch darstellbar, indem man die Einführung des aliphatischen Aminrestes mit Ammoniak oder mit $R-NH_2$ direkt an chromophoren Verbindungen der Struktur (27) bis (30) vornimmt.

$[\underline{A}]-(B)-SO_2-CH_2CH_2-T$ bzw. $[\underline{A}]-(B)-SO_2-CH=CH_2$

(27) (28)

$[\bar{K}-N=N-\underline{D}]-(B)-SO_2CH_2CH_2-T$ bzw. $[\bar{K}-N=N-\underline{D}]-(B)-SO_2-CH=CH_2$

(29) (30)

So führt z. B. auch die Kondensation von Anilin-Derivaten der Struktur (23) bis (26) mit einem reaktiven chromophoren Teilstück, wie z. B. der 1-Amino-4-brom-anthrachinon-2-sulfonsäure, und nachfolgende Aminaddition zu einer dieser Vorstufen der Struktur (10).

Besitzt in diesen Beispielen das Brückenglied B die Bedeutung von Formel (2) mit Y=Cl oder F, so ist es durchaus möglich, auch am Triazinsystem eine Substitution von Halogen durch Ammoniak oder Amin zu Verbindungen der Struktur (32) zu erreichen. Die folgende Reaktionsgleichung verdeutlicht dies.

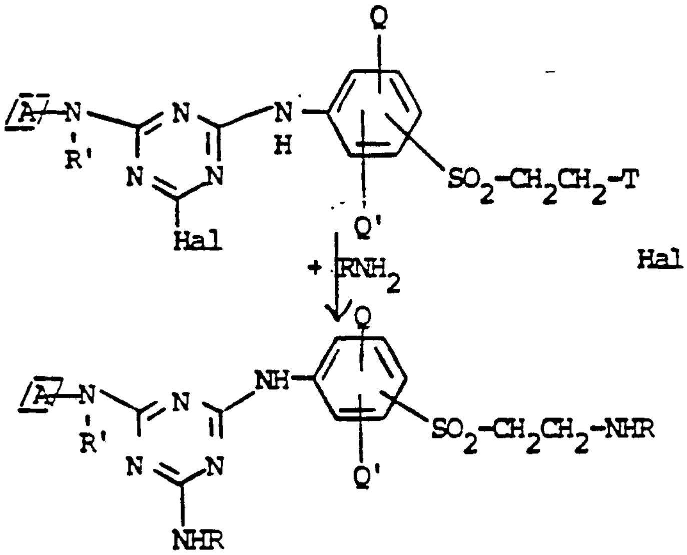

(31)

Hal = Cl oder F

(32)

Farbstoffe der Struktur (31) werden in den veröffentlichten japanischen Anmeldungen 3907/1980, 18418/1980, 118372/1980 und den veröffentlichten Europäischen Anmeldungen 48355 und 65732 offenbart.

Die Darstellung der Farbstoffvorstufen (13) und (14) erfolgt in bekannter Weise durch Kondensation von Verbindungen der Struktur (33) bzw. (34) mit fluorhaltigen Reaktivkomponenten der Struktur (11).

$$NH_2-[D]-(B)-X-CH_2-CH_2-NHR \quad (33)$$

$$[H-K]-(B)-X-CH_2-CH_2-NHR \quad (34)$$

Verbindungen der Struktur (33) sind z. B. die Amine der Formel (19) bis (22).

Die Darstellung von Verbindungen der Struktur (34) mit $X=SO_2$ kann in der bereits mehrfach zitierten Umsetzung von literaturbekannten substituierten Ethylsulfonyl- bzw. Vinylsulfonyl-Kupplungskomponenten (35) und (36)

$$[H-K]-(B)-SO_2CH_2CH_2-T \quad (35)$$

$$[H-K]-(B)-SO_2-CH=CH_2 \quad (36)$$

mit Ammoniak oder primären aliphatischen Aminen $RNH_2$ erfolgen.

Weitere Einzelheiten zur Darstellung, z. B. auch die der Zwischenprodukte, sind den nachfolgenden Beispielen zu entnehmen.

Mit den erfindungsgemäßen Reaktivfarbstoffen lassen sich auf hydroxyl- oder amidgruppenhaltigen Textilmaterialien nach bekannten Verfahren Drucke und Färbungen anfertigen, die ein hohes Echtheitsniveau aufweisen.

In der FR-A-1 263 438 werden Halogentriazinyl-azo-Farbstoffe beschriehen, die löslichmachende Gruppen sowie eine Gruppierung

$$-(CH_2)_p-(\overset{R_1}{\overset{|}{N}})_m-X-(\overset{R_2}{\overset{|}{N}})_n-Alkylen-\overset{R_3}{\overset{|}{N}}-Y$$

enthalten, worin p=0,1 oder 2, m oder n=0 und das andere 0 oder 1, X, u. a. $=SO_2$, $R_1$ und $R_2$=H oder ggf. substituierter Kohlenwasserstoff-Rest. Farbstoffe mit Fluor-Heterocyclus werden dabei nicht erwähnt.

**Beispiel 1**

Eine Lösung von 86,0 g des bekannten Farbstoffes (I)

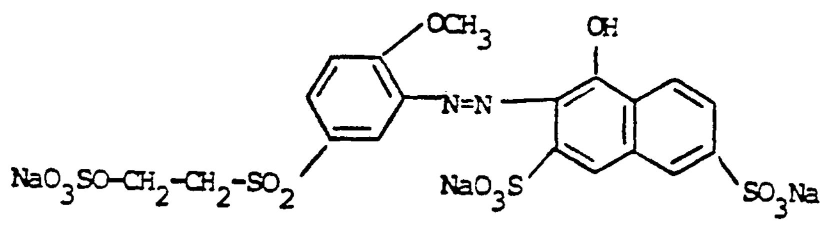

(I)

(Farbstoff bekannt aus DOS 2 810 908)

in 200 ml Wasser werden zu einer 40°C warmen Lösung von 91.0 g Taurin (β-Aminoethylsulfonsäure) und 29.0 g Natriumhydroxid in 300 ml Wasser langsam zugetropft. Man rührt 30 Minuten nach, läßt abkühlen und stellt mit Salzsäure auf pH 1,0. Nach Aussalzen mit 50 g Kochsalz saugt man - zur Abtrennung des überschüssigen Taurins - den ausgefallenen roten Niederschlag ab. Die Farbstoffpaste wird in 250 ml Wasser neutral gelöst und bei 15°C (Eiszugabe) mit 29.0 g 5-Chlor-2,4,6-trifluorpyrimidin kondensiert. Dabei hält man den pH der Reaktionslösung durch Zugabe von Sodalösung zwischen 7 bis 8. Wenn sich der pH-Wert nicht mehr wesentlich ändert, salzt man mit 15 g Kochsalz aus und saugt ab. Nach dem Trocknen und Mahlen erhält man ein rotes Farbstoffpulver, das auf Baumwolle eine klare gelbstichig rote Färbung mit hohem Echtheitsniveau ergibt. Die Nuance des Farbstoffes gemäß Beispiel 1 entspricht dem des C.I. Reactive Red 113.

Der Farbstoff gemäß Beispiel 1 besitzt folgende Struktur:

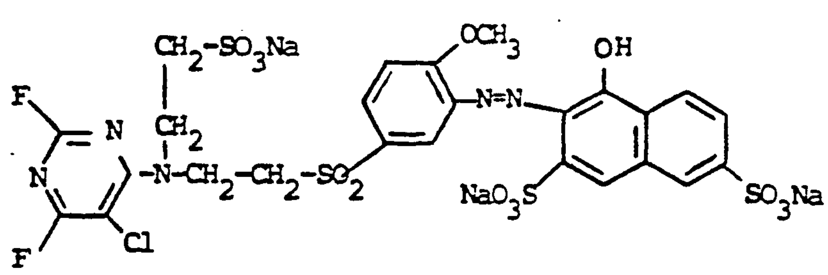

**Beispiel 2**

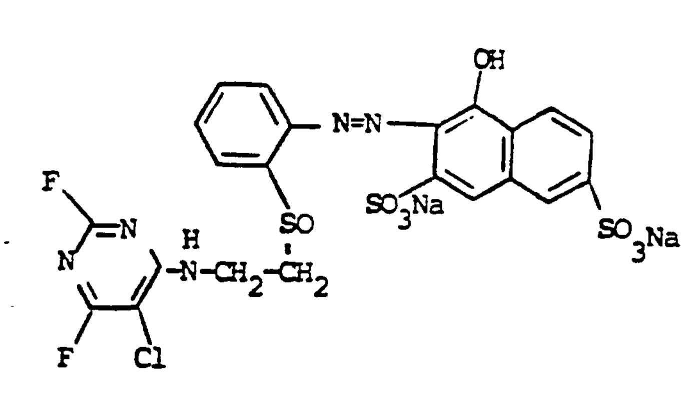

28.0 g (2'-Aminoethyl)-(2'-aminophenyl)sulfoxid werden in 100 ml Salzsäure, 100 ml Wasser und 100 g Eis gelöst und tropfenweise mit 35 ml 30 %iger Natriumnitritlösung diazotiert; man rührt eine Stunde bei 0-5°C nach und entfernt den Nitritüberschuß. Diese Lösung tropft man zu einer Vorlage aus 50 g 1-Hydroxy-3,6-naphthalindisulfonsäure(di-Na-salz) in 200 ml Wasser und hält dabei durch Zugabe von konz. Natronlauge den pH-Wert konstant zwischen 7 und 9. Nach weiteren 2 Stunden fügt man 100 g Eis und 29,0 g 5-Chlor-2,4,6-trifluorpyrimidin zu und kondensiert bei konstanten pH 7 bis 8. Nach Reaktionsende saugt man ab und trocknet bei 70° C im Vakuum. Der neue Reaktivfarbstoff färbt Baumwolle in goldgelben Farbton [4].

(Die Zahl in eckiger Klammer entspricht hier und im folgendem der C.I. Hue-number.)

Die Darstellung dieses Farbstoffes (Bsp. 2) ist auch möglich, indem man (2'-Aminoethyl)-(2'-aminophenyl)-sulfoxid zunächst mit der fluorhaltigen Reaktivkomponente bei 10° C und konstantem pH 7-8 kondensiert. Die Suspension des Kondensationsprodukts wird dann in bekannter Weise bei 0-5° C und pH 2,0 mit Natriumnitritlösung diazotiert und wie oben beschrieben auf 1-Hydroxy-3,6-naphthalindisulfonsäure gekuppelt.

**Beispiel 3**

Eine Lösung von 135 g des Farbstoffes (II)

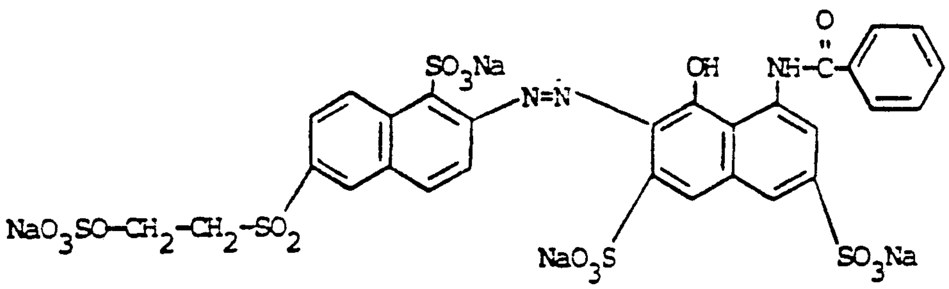

(II)

in 200 ml Wasser werden zu einer 40° C warme Lösung von 55 g -Aminoessigsäure und 29 g Natriumhydroxid in 300 ml Wasser langsam zugetropft. (Man kann auch die Farbstofflösung vorlegen und zügig die alkalische-Aminoacetatlösung zugießen). Man rührt 30 Minuten nach und stellt mit Salzsäure auf pH 1. Analog dem Beispiel 1 wird zwischenisoliert und die erneut angerührte Paste mit 29 g 5-Chlor-2,4,6-trifluorpyrimidin kondensiert. Nach Filtration und Trocknen erhält man 195 g eines Reaktivfarbstoffes, der Baumwolle bei sehr gutem Aufbauvermögen in klarem blaustichig rotem Ion färbt [9].

Anstelle der -Aminoessigsäure können auch andere primäre aliphatische Amine, wie z. B. Methylamin oder β-Hydroxyethylamin, eingesetzt werden, was schließlich zu analogen roten Farbstoffen gemäß Beispiel 3 führt.

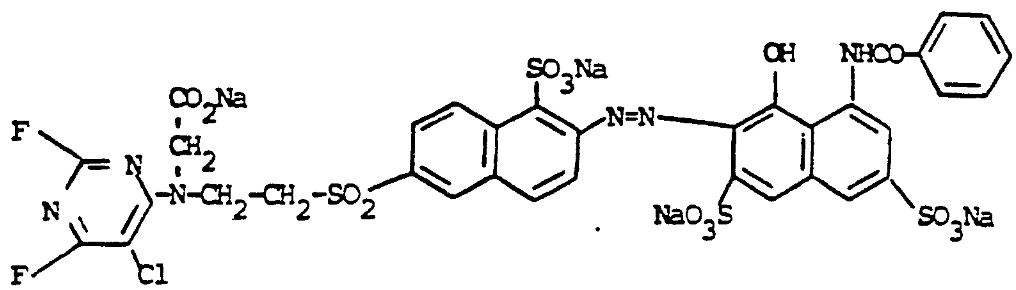

(Farbstoff gemäß Bsp. 3)

**Beispiel 4**

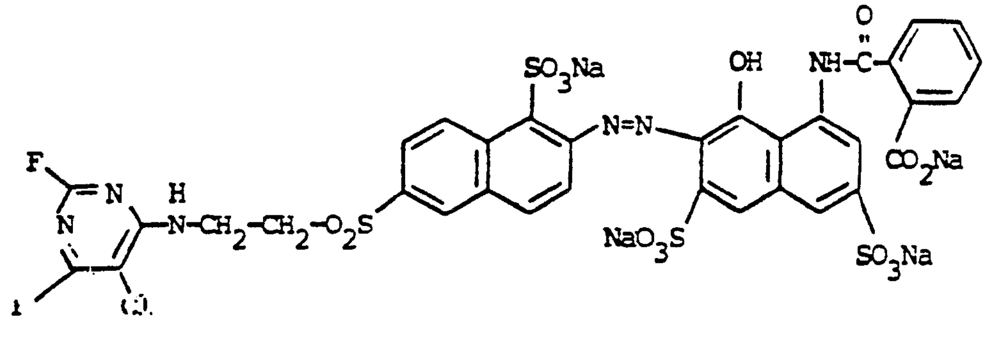

48.0 g (2'-Aminoethyl)-(2'-amino-1'-sulfo-6'-naphthyl)-sulfon werden in 100 ml Salzsäure, 100 ml Wasser und 100 g Eis angerührt und tropfenweise mit 35 ml 30 %iger Natriumnitritlösung diazotiert. Man rührt eine weitere Stunde bei 5-10°C und entfernt dann den Nitritüberschuß. Diese Mischung wird zu einer Vorlage aus 77.5 g 1-Hydroxy-8-N(2'-carboxybenzoyl)-amino-3,6-naphthalindisulfonsäure (Tri-Na-Salz) zugetropft; durch Zugabe von fester Soda hält man dabei den pH oberhalb von pH 8. Nach erfolgter Kupplung fügt man bei pH 8 und 25°C 36.0 g 5-Chlor-2,4,6-trifluorpyrimidin zu. Den pH hält man durch Zugabe von Natriumhydrogencarbonat konstant bei pH 7-8. Nach 3 Stunden Rühren salzt man mit 50 g Kochsalz aus und saugt danach ab. Der isolierte Farbstoff liefert eine brillante rote Färbung auf Baumwolle [97].

**Beispiel 5**

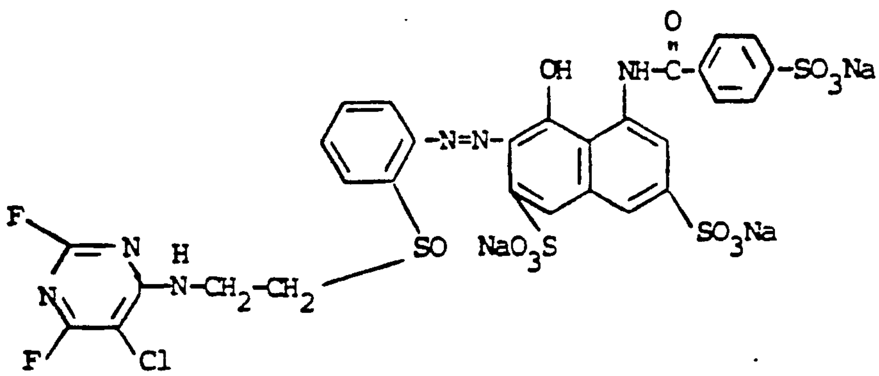

Analog der Vorschrift gemäß Beispiel 2 werden 28.0 g (2'-Aminoethyl)-(2'-aminophenyl)sulfoxid diazotiert, auf 80.0 g 1-Hydroxy-8-N(4'-sulfobenzoyl)amino-3,6-naphthalindisulfonsäure (Tri-Na-Salz) gekuppelt und mit 29.0 g 5-Chlor-2,4,6-trifluorpyrimidin kondensiert. Der resultierende Farbstoff liefert eine klare rote Färbung [8] auf Baumwolle und besitzt ein sehr gutes Aufbauvermögen.

In ähnlicher Weise, wie in den Beispielen 1 bis 5 beschrieben, gelingt auch die Darstellung folgender neuer wertvoller Reaktivfarbstoffe:

| Bsp. | Reaktivfarbstoffe | [C.I.Hue-Nr.] Nuance |
|---|---|---|
| 6 | 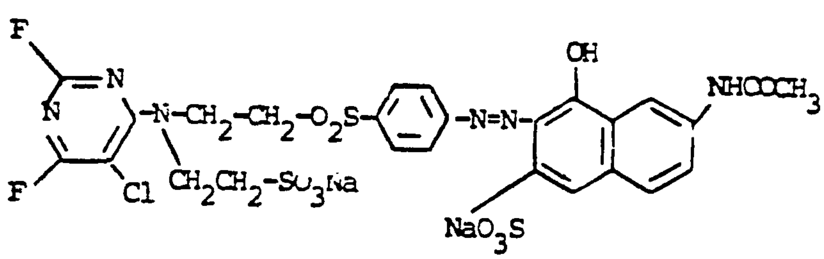 | analog C.I.R. Orange 16 |

| Bsp. | Reaktivfarbstoff | [C.I. Hue-Nr.] Nuance |
|---|---|---|
| 7 | 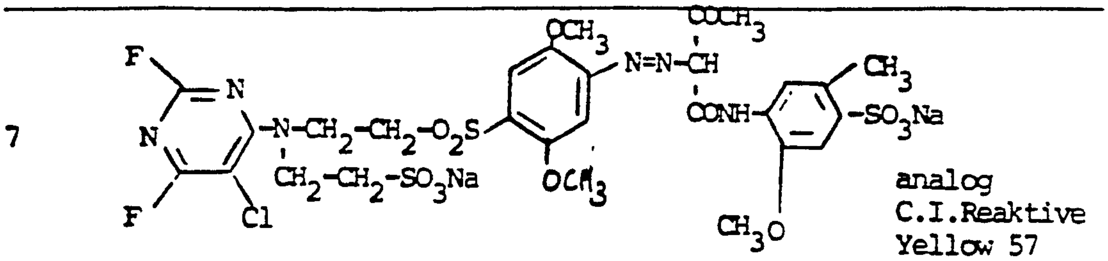 | analog C.I.Reaktive Yellow 57 |
| 8 | 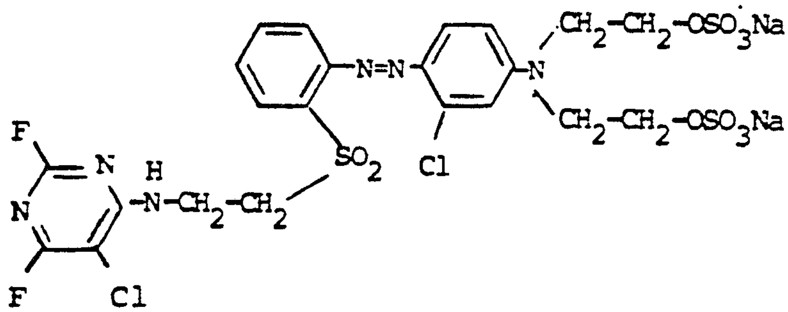 | goldgelb [4] |
| 9 | 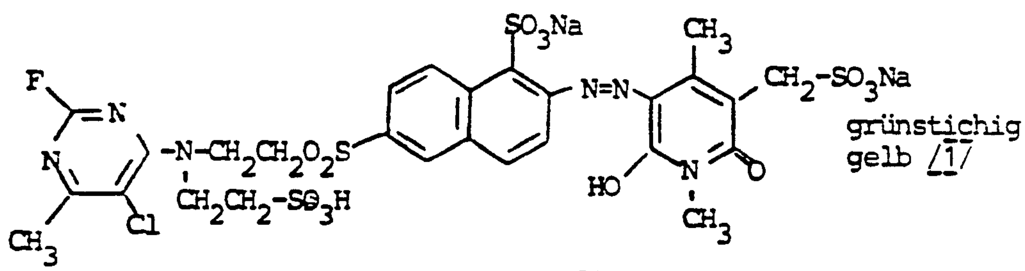 | grünstichig gelb [1] |
| 10 | 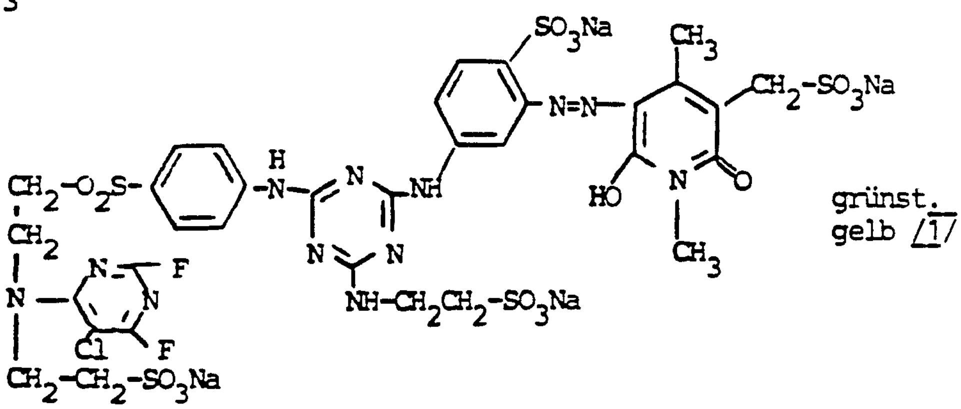 | grünst. gelb [1] |

| Bsp. | Reaktivfarbstoff | Nuance |
|---|---|---|
| 11 | 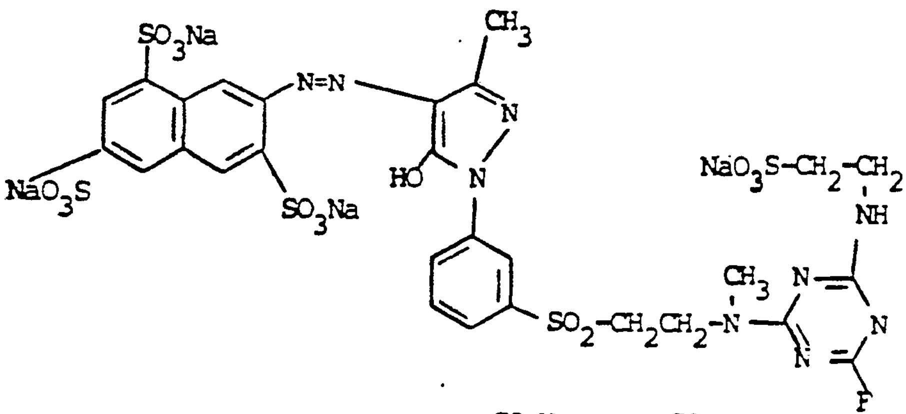 | gelb /2/ |
| 12 | 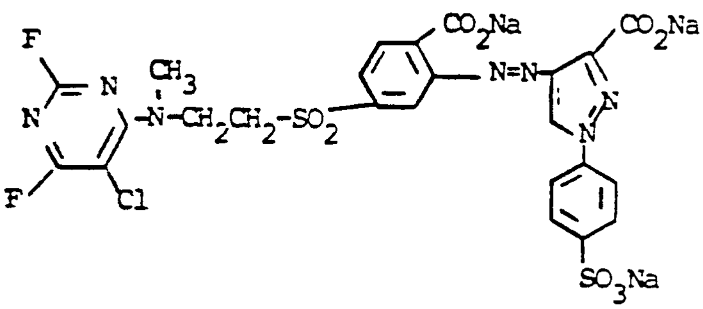 | gelb /2/ |
| 13 | 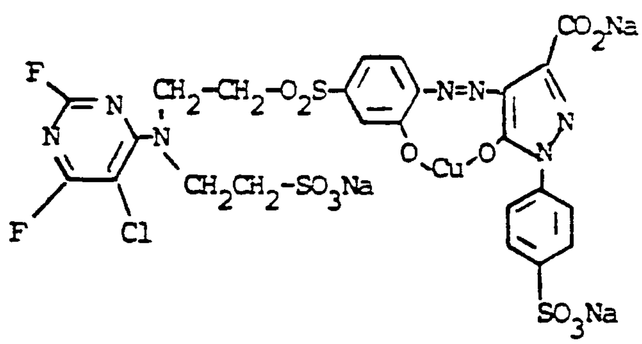 | gelbst. braun (analog C.I. Reactive Brown 16:1) |
| 14 | 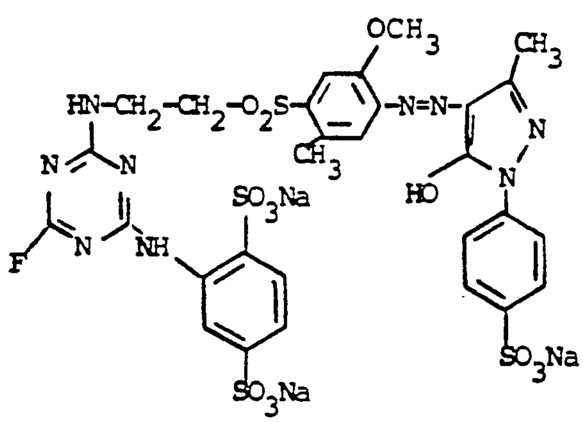 | rotst. gelb (analog C.I. R. Yellow 15) |

| Bsp. | Reaktivfarbstoff | Nuance |
|---|---|---|
| 15 | 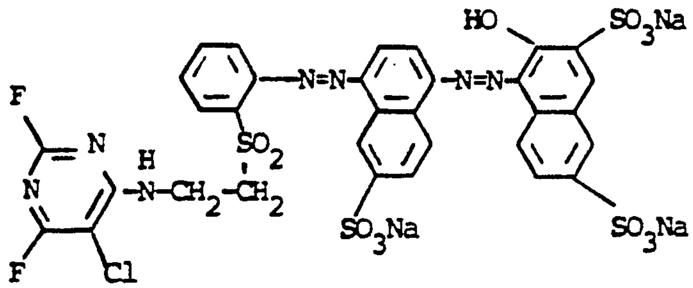 | rotst. braun [26] |
| 16 | 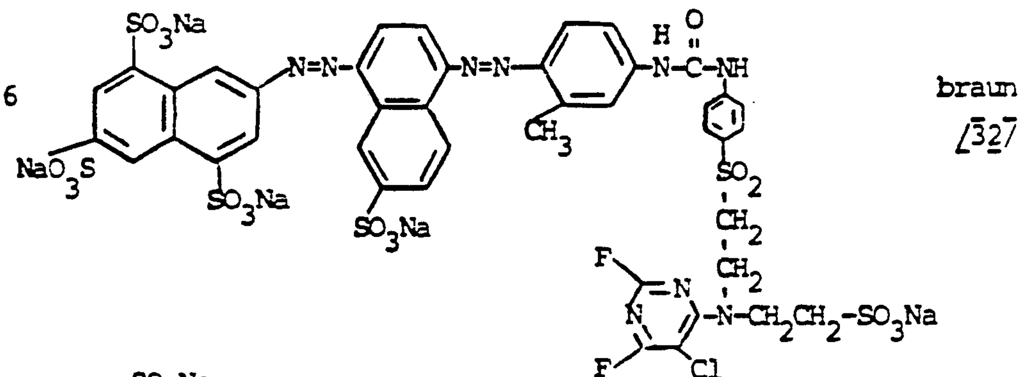 | braun [32] |
| 17 | 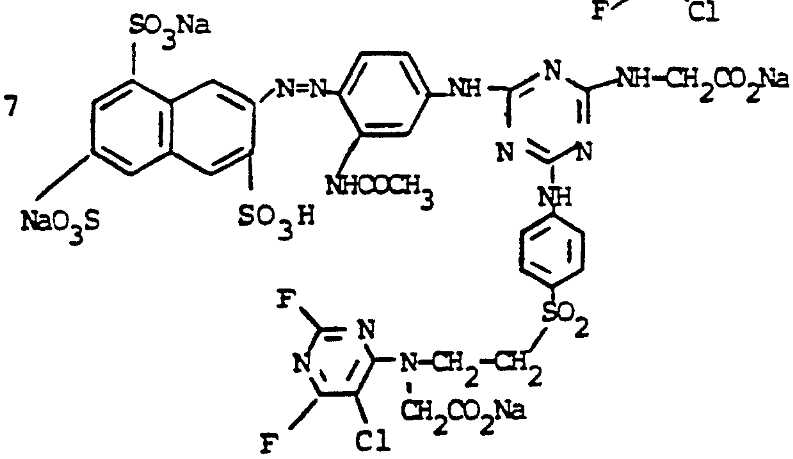 | goldgelb [4] |
| 18 | 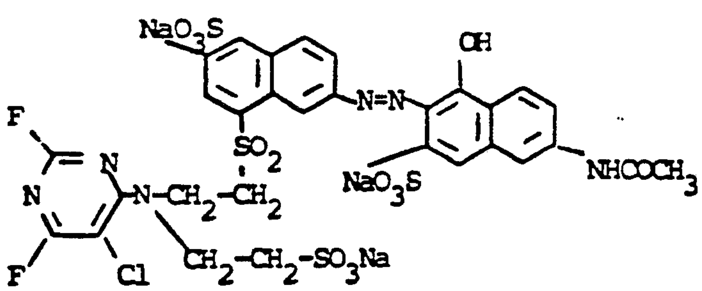 | orange (analog C.I. Reactive Orange 82) |

| Bsp. | Reaktivfarbstoffe | Nuance |
|---|---|---|
| 19 | 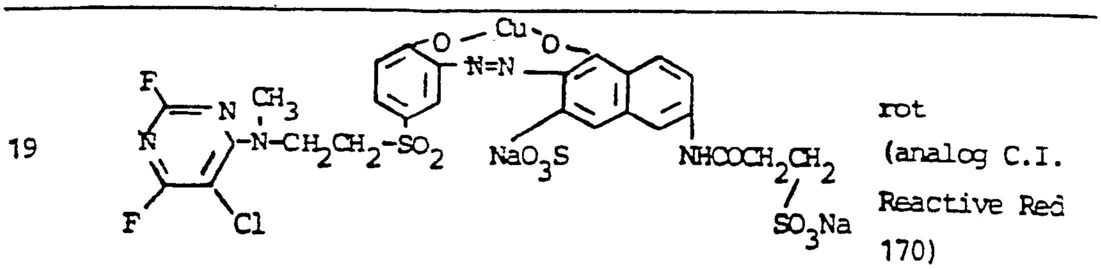 | rot (analog C.I. Reactive Red 170) |
| 20 | 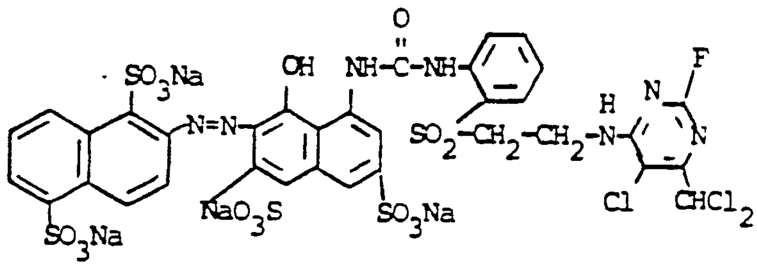 | blaust. rot (analog C.I. R. Red 105) |
| 21 | 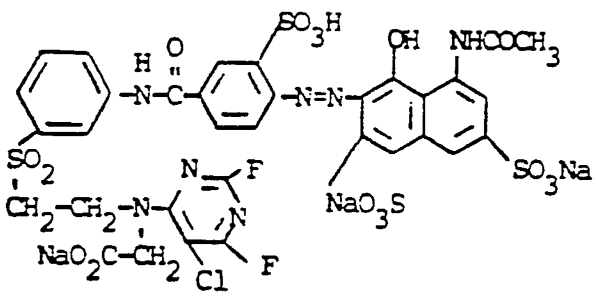 | blaust. rot /9/ |
| 22 | 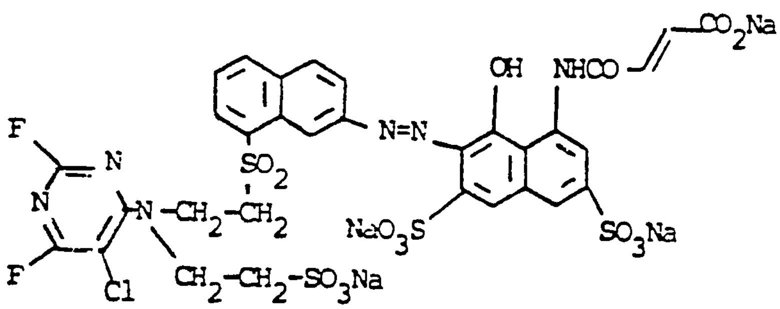 | blaust. rot /9/ |

| Bsp. | Reaktivfarbstoff | Nuance |
|---|---|---|
| 23 | 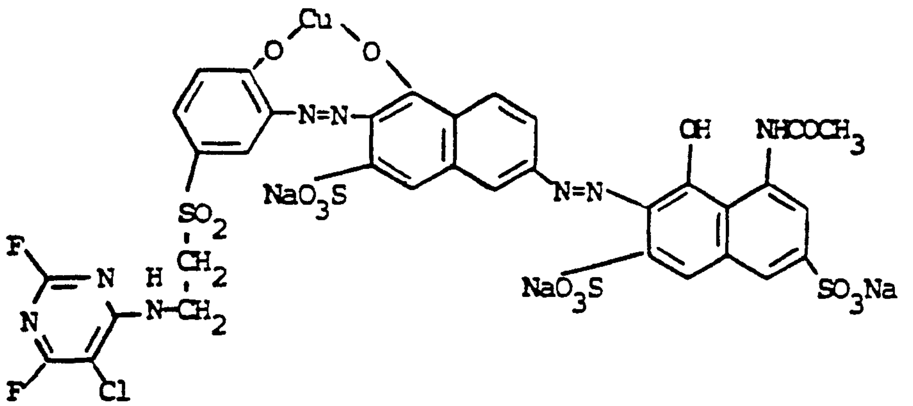 | marine-blau [28] |
| 24 | 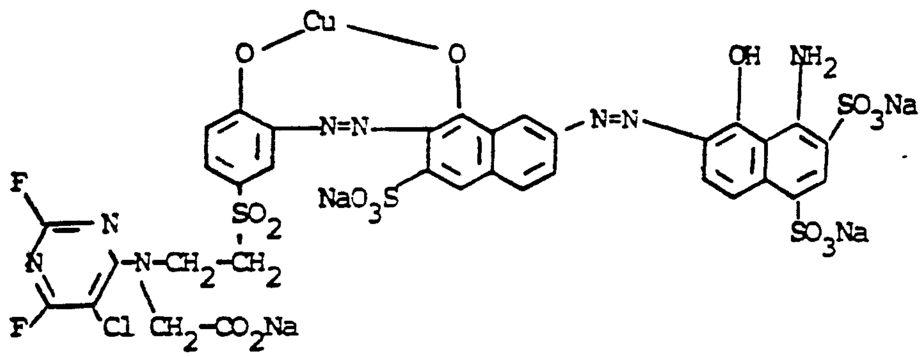 | blau (analog C.I.Reactive Blue 76) |
| 25 | 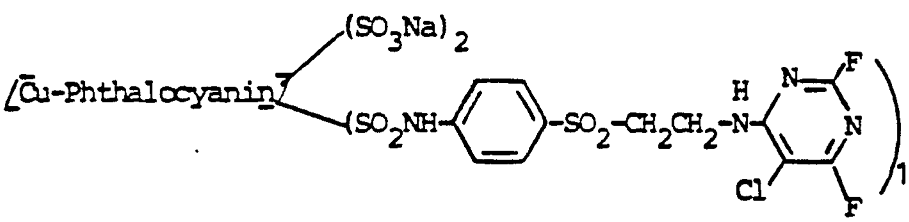 | türkisblau [16] |
| 26 | 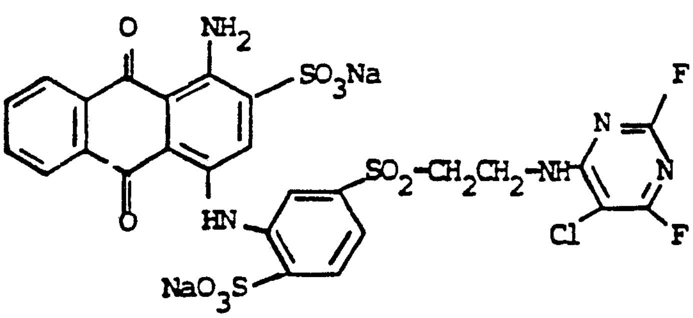 (Darstellung vgl. Bsp. 27) | blau [14] |

**Beispiel 27**

Eine Lösung von 93,0 g des Farbstoffes (III)

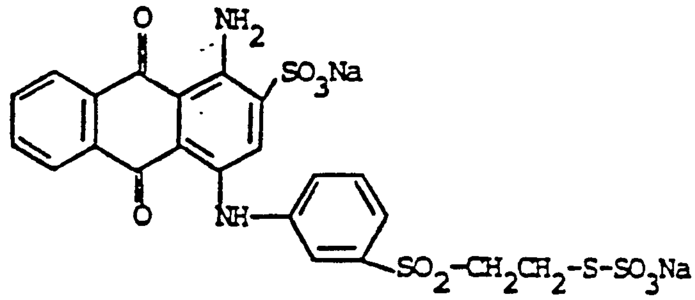

(III)

in 900 ml Wasser werden in eine 40°C warme Lösung von 91,0 g Taurin (ß-Aminoethylsulfonsäure) und 29,0 g Natriumhydroxid in 300 ml Wasser langsam zufließen lassen. Zur Abtrennung des überschüssigen Amins stellt man neutral, salzt mit 60 g Kochsalz aus und saugt ab. Die feuchte Paste wird in 300 ml Wasser angerührt und wie in den vorausgegangenen Beispielen bereits mehrfach beschrieben mit 29,0 g 5-Chlor-2,4,6-trifluorpyrimidin kondensiert. Der danach resultierende Anthrachinonfarbstoff zeigt auf Baumwolle ein hervorragendes Aufbauvermögen und färbt in klaren blauen Tönen [14].

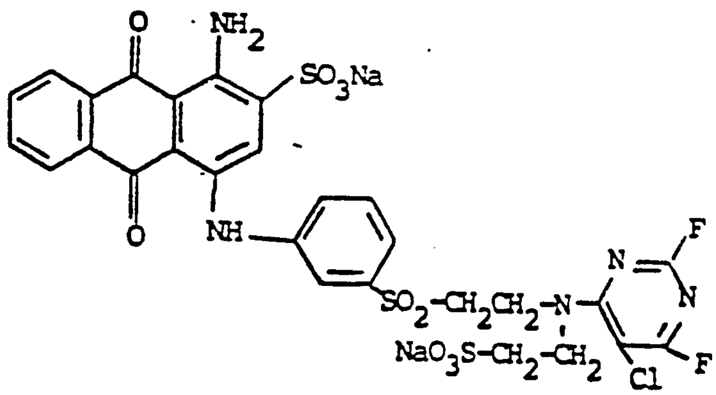

Färbevorschrift: 2 Teile des gemäß Beispiel 27 erhältlichen Farbstoffes werden in 100 Teilen Wasser gelöst. Diese Lösung fügt man zu 1900 Teilen kaltem Wasser, versetzt mit 60 Teilen Natriumchlorid und gibt das Baumwollgewebe (100 Teile) zu. Man erwärmt das Färbebad auf 50-60°C und fügt nach 30 Minuten 4 Vol.-Teile einer 30 %igen Natronlauge, 10 Teile Soda und 60 Teile Natriumchlorid zu. Man hält die Temperatur für weitere 30 Minuten konstant bei 60°C, entnimmt das Baumwollgewebe, spült und seift dann die Färbung 15 Minuten in einer 0,3 %igen kochenden Lösung eines ionenfreien Waschmittels. Nach erneutem Spülen und Trocknen resultiert eine klare brillante blaue Färbung.

**Patentansprüche**

1. Reaktivfarbstoffe der allgemeinen Formel

$$[A]-(B)-X-CH_2-CH_2-\underset{R}{\underset{|}{N}}-Z \qquad (1)$$

worin

A = Rest eines organischen Farbstoffs der Mono- oder Polyazo-, Metallkomplexazo-, Anthrachinon-, Phthalocyanin-, Formazan-, Dioxazin-, Xanthen- oder Phenazin-Reihe,

B = direkte Bindung zwischen A und X oder Brückenglied,

X = S, SO oder $SO_2$

R = H, gegebenenfalls substituiertes $C_1$-$C_4$-Alkyl, gegebenenfalls substituiertes $C_2$-$C_6$-Alkenyl, oder gegebenenfalls substituierter Benzylaminrest

Z = fluorhaltiger faserreaktiver Rest.

2. Reaktivfarbstoffe gemäß Anspruch 1), dadurch gekennzeichnet, daß B für eine direkte Bindung zwischen A und X oder ein Brückenglied der Struktur (2) bis (5) steht:

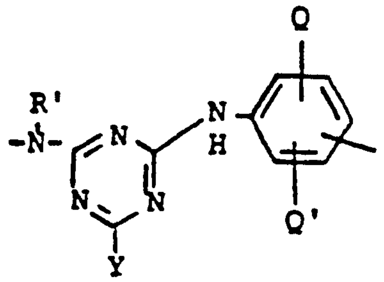

(2)

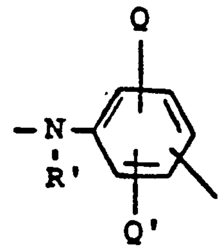

(3)

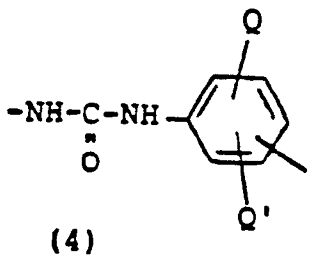

(4)

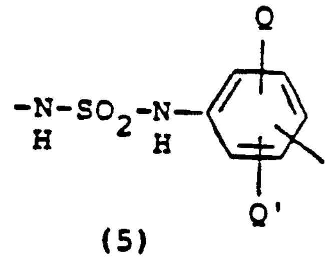

(5)

wobei in den Formeln (2) bis (5) jeweils die Aminofunktion an ein Kohlenstoffatom eines aromatischcarbocyclischen oder eines aromatisch heterocyclischen Ringes im Chromophor A und mit der freien Funktion des Phenylsystems am X gebunden ist und wobei für die Strukturen (2) bis (5) gilt:

R' = H, gegebenenfalls substituiertes Alkyl oder gegebenenfalls substituiertes Aryl,

Y = OH, Cl, F, gegebenenfalls substituiertes $C_1$-$C_4$-Mercaptyl, gegebenenfalls substituiertes $C_1$-$C_4$-Alkoxy, $SO_3H$, NHR',

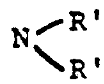

oder gegebenenfalls substituiertes Phenoxy,

Q und Q' = unabhängig voneinander H, OH, Halogen, $SO_3H$, COOH, gegebenenfalls substituiertes $C_1$-$C_4$-Alkyl, gegebenenfalls substituiertes $C_1$-$C_4$-Alkoxy,

und wobei die Substituenten A, X, R und Z die in Anspruch 1) angegebene Bedeutung besitzen.

3. Reaktivfarbstoffe gemäß Anspruch 1) bis 2), dadurch gekennzeichnet, daß X für $SO_2$ steht und die übrigen Reste A, B, R und Z die in Anspruch 1) bis 2) angegebene Bedeutung haben.

4. Reaktivfarbstoffe gemäß Anspruch 1) bis 3) der Formel

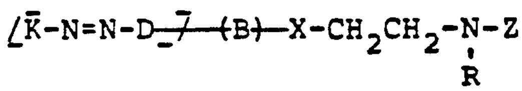

(8)

worin

K = Rest einer Kupplungskomponente der Benzol-, Naphthalin- oder der heterocyclischen Reihe und

D = Rest einer Diazokomponente der Benzol- oder Naphthalinreihe und worin B, X, R und Z die in Anspruch 1) bis 3) angegebene Bedeutung haben.

5. Reaktivfarbstoffe der Ansprüche 1 - 3 worin

A =

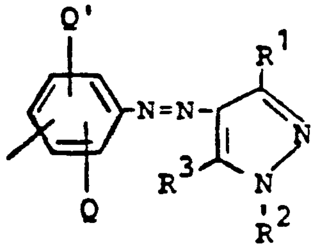

(a)

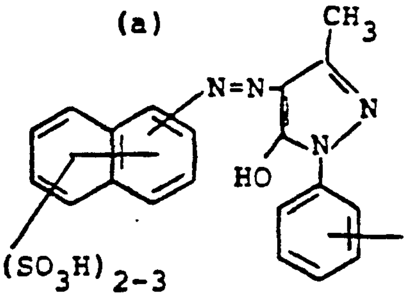

(b)

wobei

$R^1 = CH_3$, COOH, COO(Alkyl-$C_1C_4$), $CONH_2$,

$R^2 = H$, gegebenenfalls substituiertes Alkyl, gegebenenfalls substituiertes Aryl,

$R^3 = OH$ oder $NH_2$

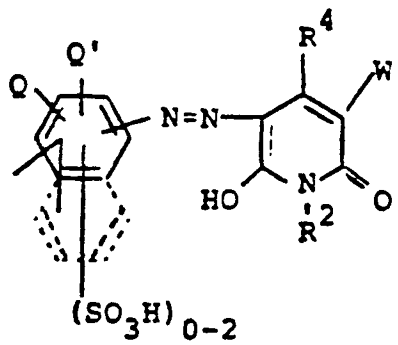

(c)

$R^4 = H$, $CH_3$, COOH, $CH_2$-$SO_3H$,

W = H, CN, $CONH_2$, $SO_3H$, $SO_2CH_3$, $CH_2$-$SO_3H$, $CH_2$-$CO_2H$, Halogen, $C_1$-$C_3$-Alkyl;

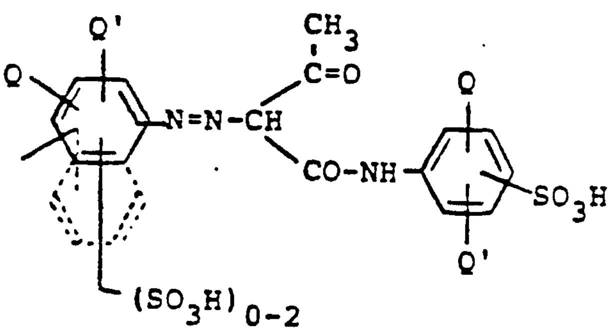

(d)

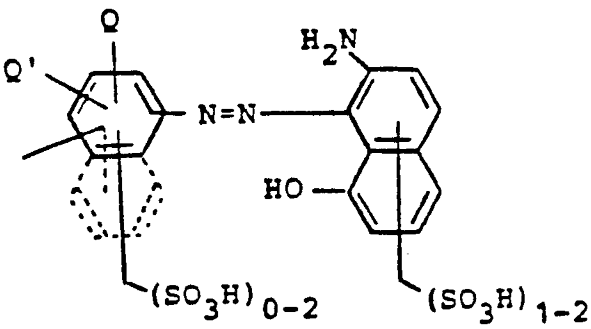

(e)

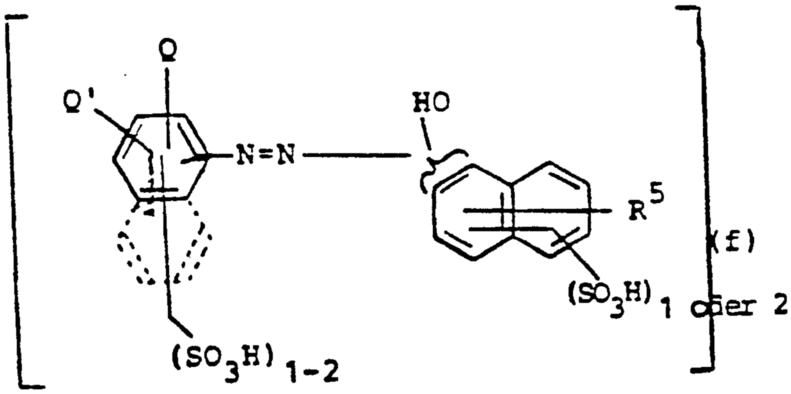

(f)

R5 = H, Cl, Br, Alkoxy, OH, gegebenenfalls substituiertes Amino,

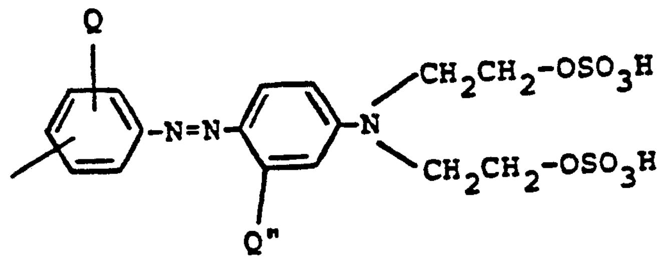

(g)

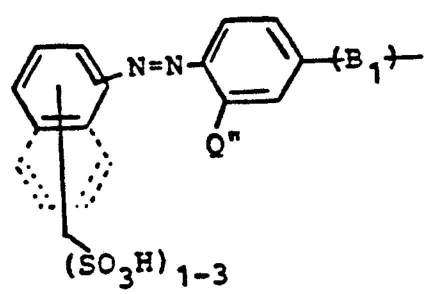

(h)

Q″ = H, $CH_3$, $NHCOCH_3$, $NHCONH_2$, $NHSO_2CH_3$ und wobei $B_1$ für ein Brückenglied steht.

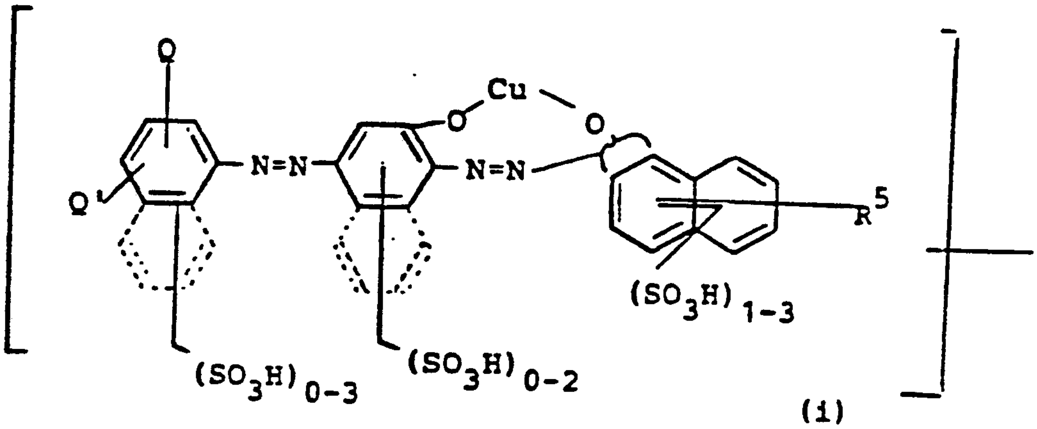

(i)

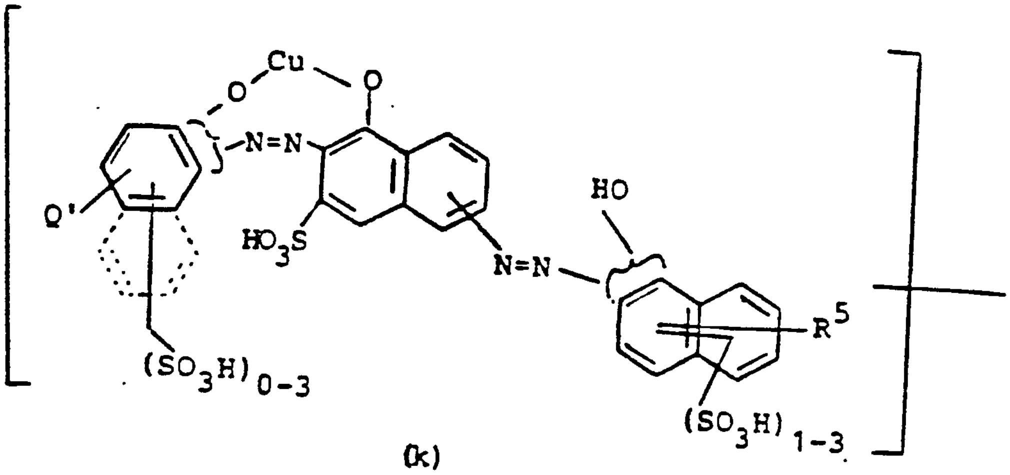

(k)

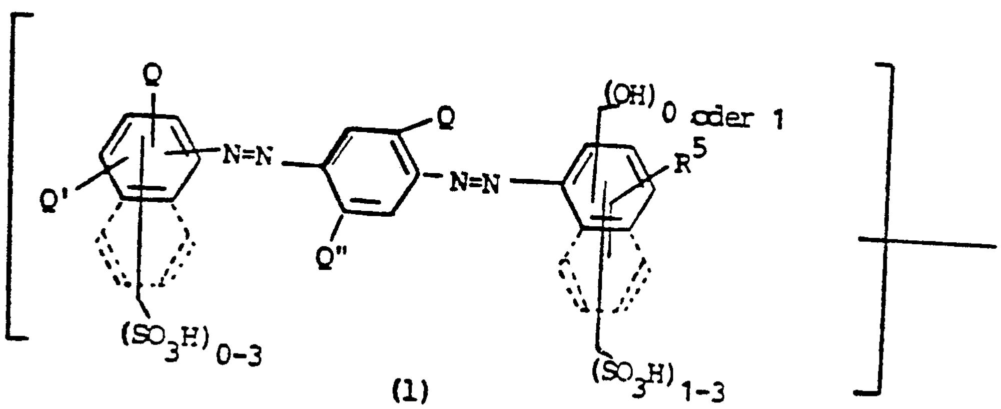

(l)

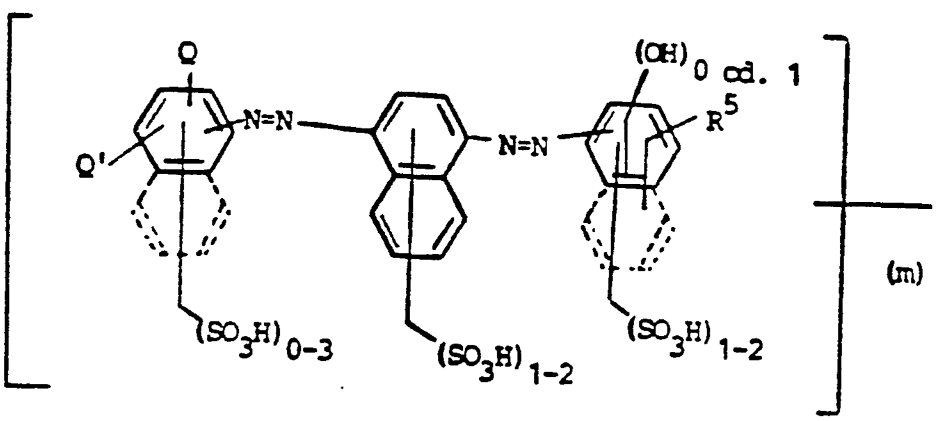

(m)

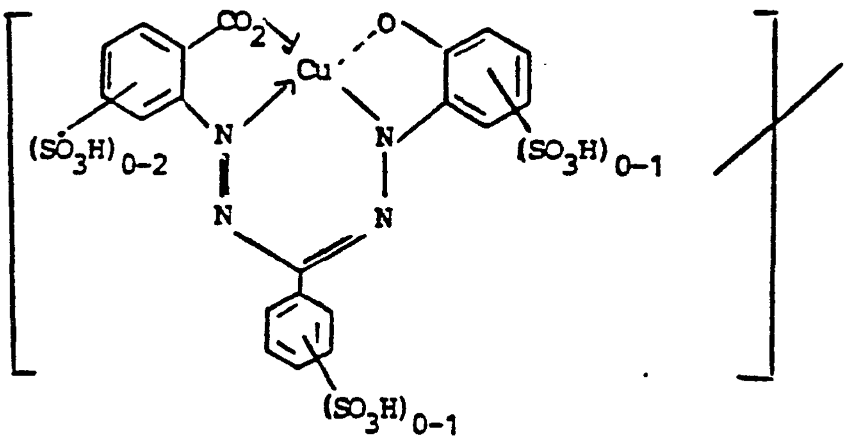

(n)

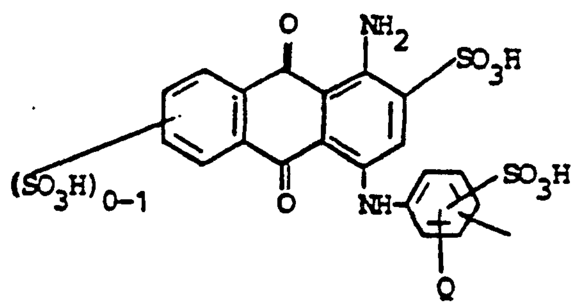

(o)

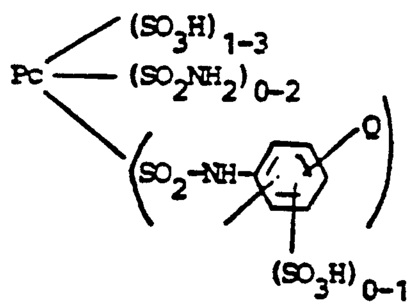

1 bis 3 (p)

Pc = $Cu^{2+}$ oder $Ni^{2+}$-Phthalocyaninrest, wobei die Gesamtzahl der Substituenten am Pc-Gerüst höchstens 4 beträgt.

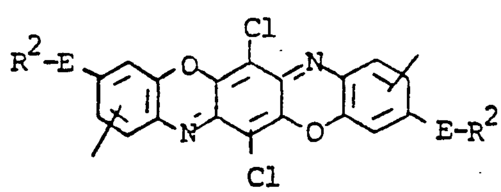

(q)

worin

E = NH, O, S

$R^2$ = gegebenenfalls substituiertes $C_1$-$C_4$-Alkyl, Phenyl oder Naphthyl.

6. Verwendung von Reaktivfarbstoffen gemäß Anspruch 1) bis 4) zum Färben oder Bedrucken von hydroxyl- oder amidgruppenhaltigen Textilmaterial.

7. Mit Farbstoffen gemäß Anspruch 1) bis 4) gefärbtes oder bedrucktes hydroxyl- oder amidgruppenhaltiges Textilmaterial.

## Claims

1. Reactive dyestuffs of the general formula

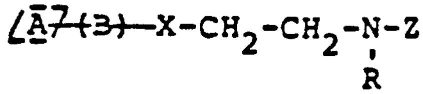

(1)

wherein

A = a radical of an organic dyestuff of the mono- or polyazo, metal complex azo, anthraquinone, phthalocyanine, formazan, dioxazine, xanthene or phenazine series,

B = a direct bond between A and X or a bridge member,

X = S, SO or $SO_2$,

R = H, optionally substituted $C_1$-$C_4$-alkyl, optionally substituted $C_2$-$C_6$-alkenyl or an optionally substituted benzylamine radical and

Z = a fluorine-containing fibre-reactive radical.

2. Reactive dyestuffs according to Claim 1), characterised in that B represents a direct bond between A and X or a bridge member of the structure (2) to (5):

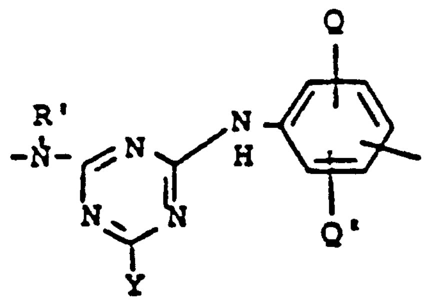

(2)

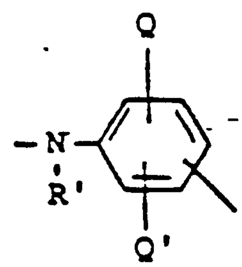

(3)

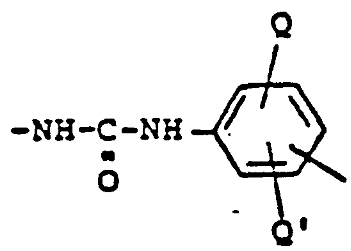

(4)

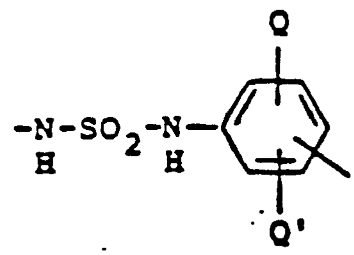

(5)

where, in the formulae (2) to (5), the amino function is in each case bonded to a carbon atom of an aromatically carbocyclic or aromatically heterocyclic ring in the chromophore A and to X by means of the free function of the phenyl system, and where, in the structures (2) to (5):

R' = H, optionally substituted alkyl or optionally substituted aryl,

Y = OH, Cl, F, optionally substituted $C_1$-$C_4$-mercaptyl, optionally substituted $C_1$-$C_4$-alkoxy, $SO_3H$, NHR',

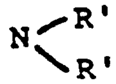

or optionally substituted phenoxy, and

Q and Q' = independently of each other, H, OH, halogen, $SO_3H$, COOH, optionally substituted $C_1$-$C_4$-alkyl or optionally substituted $C_1$-$C_4$-alkoxy,

and where the substituents A, X, R and Z have the meaning given in Claim 1.

3. Reactive dyestuffs according to Claim 1) to 2), characterised in that X represents $SO_2$ and the other radicals A, B, R and Z have the meaning given in Claim 1) to 2).

4. Reactive dyestuffs according to Claim 1) to 3) of the formula

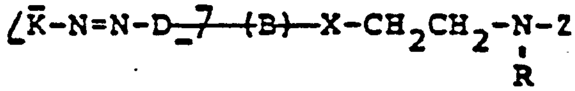

(8)

wherein

K = a radical of a coupling component of the benzene, naphthalene or heterocyclic series and

D = a radical of a diazo component of the benzene or naphthalene series and wherein B, X, R and Z have the meaning given in Claim 1) to 3).

5. Reactive dyestuffs of Claims 1 - 3 wherein A =

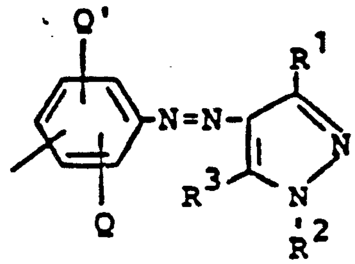

(a)

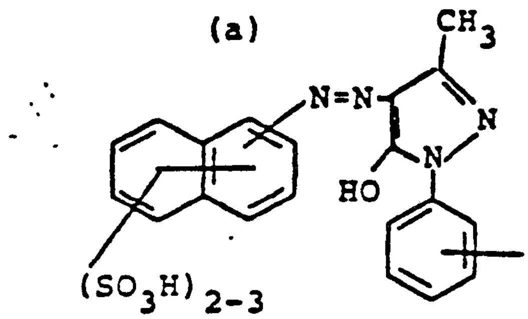

(b)

where

$R^1 = CH_3$, COOH, COO(alkyl-$C_1$-$C_4$) or $CONH_2$,

$R^2$ = H, optionally substituted alkyl or optionally substituted aryl,

$R^3$ = OH or NH2

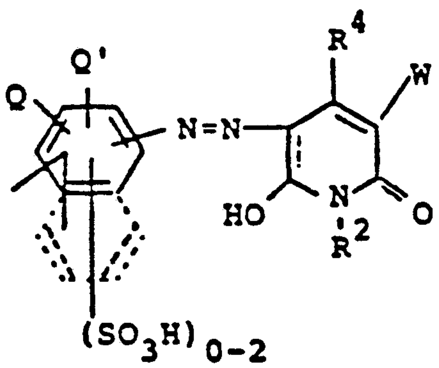

(c)

$R^4$ = H, $CH_3$, COOH or $CH_2$-$SO_3H$,

W = H, CN, $CONH_2$, $SO_3H$, $SO_2CH3$. $CH_2$-$SO_3H$, $CH_2$-$CO_2H$, halogen or $C_1$-$C_3$-alkyl;

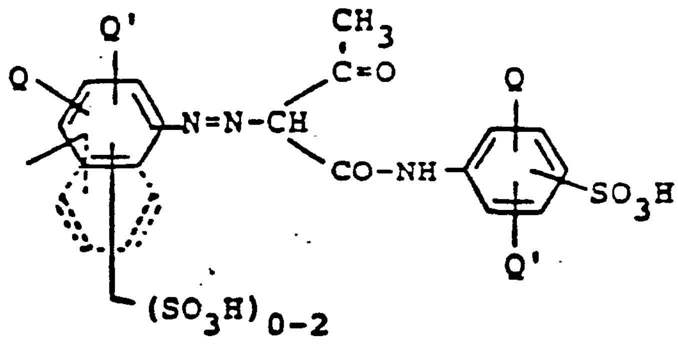

(d)

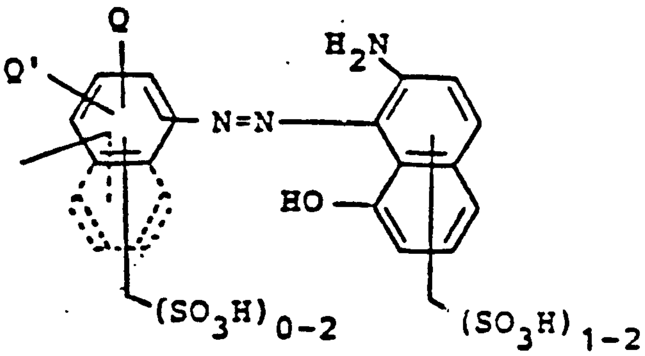

(e)

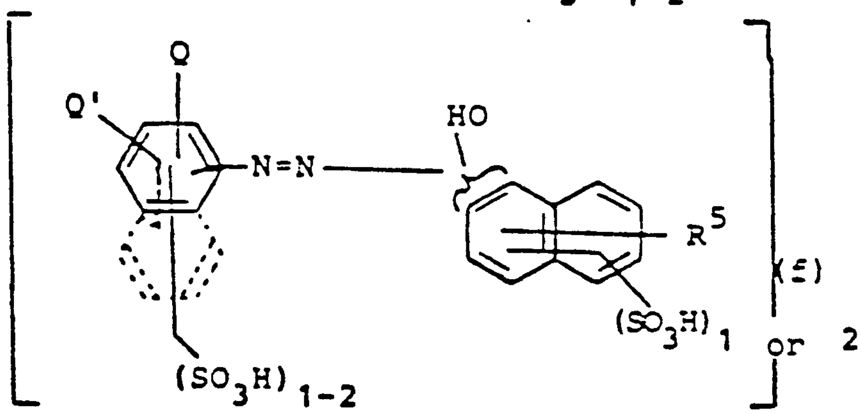

(f)

$R^5$ = H, Cl, Br, alkoxy, OH or optionally substituted amino,

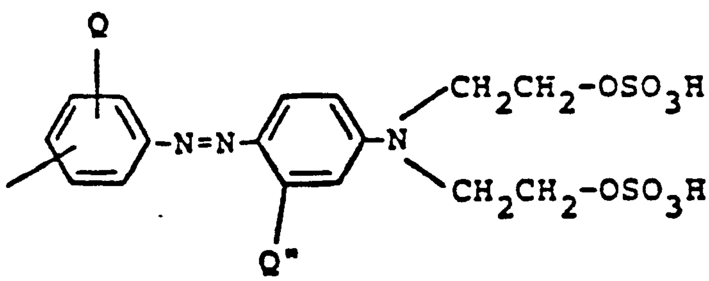

(g)

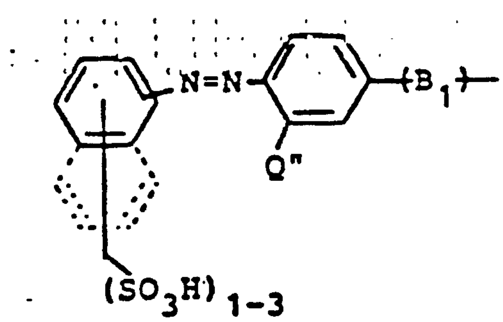

(h)

Q″ = H, $CH_3$, $NHCOCH_3$, $NHCONH_2$ or $NHSO_2CH_3$ and where $B_1$ represents a bridge member.

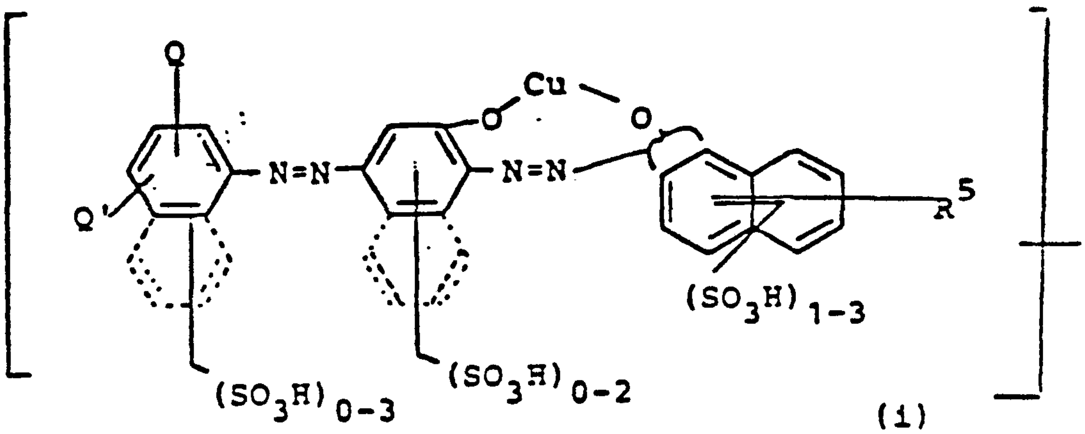

(i)

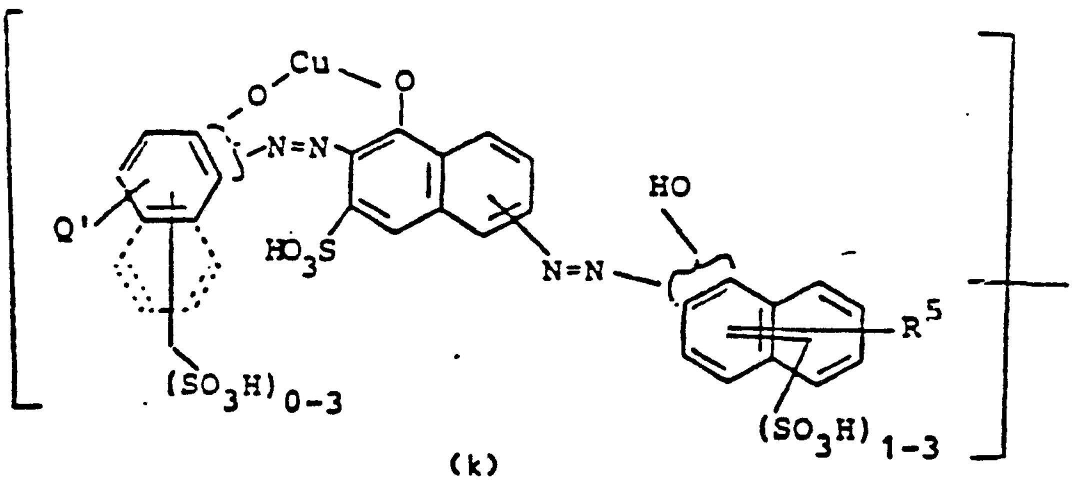

(k)

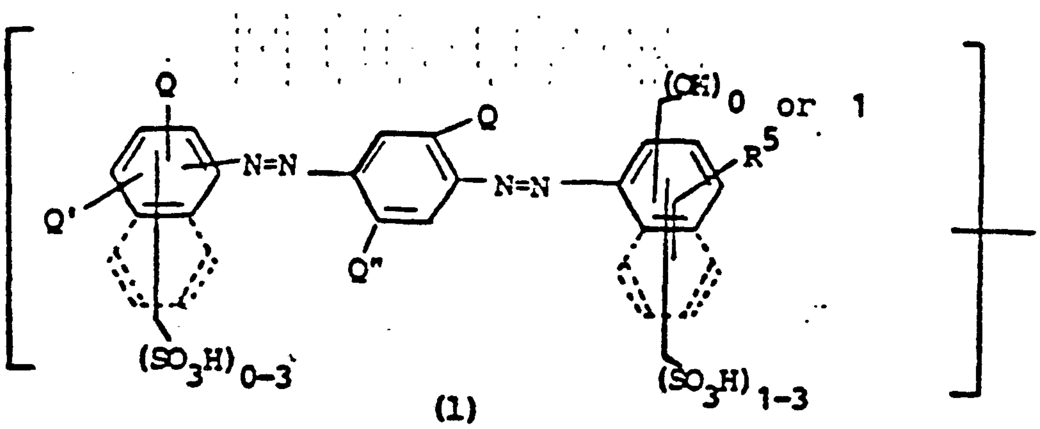

(l)

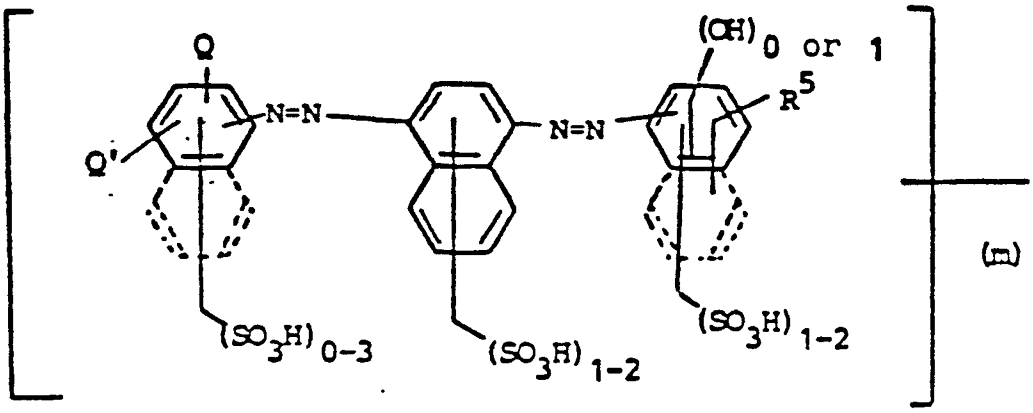

(m)

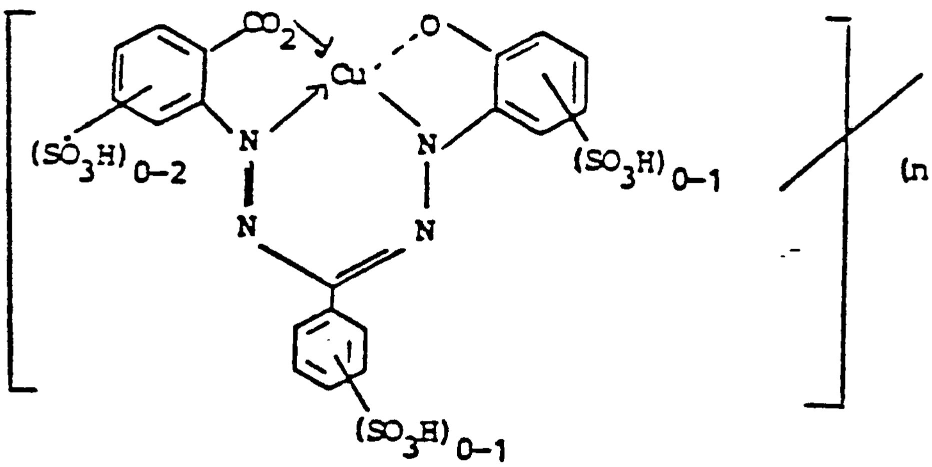

(n)

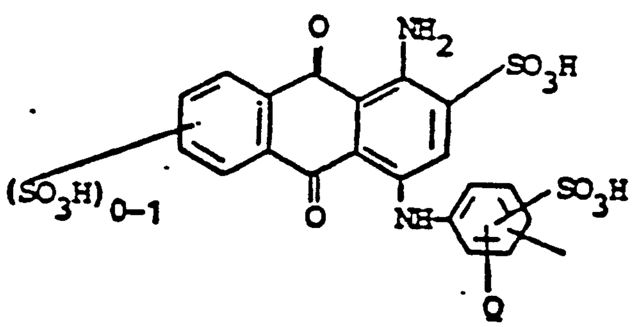

(o)

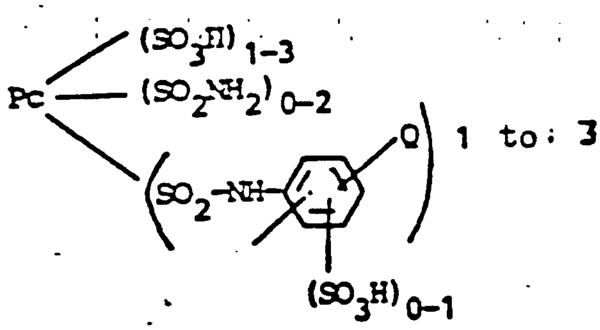

(p)

Pc = a $Cu^{2+}$ or $Ni^{2+}$-phtalocyanine radical where the total number of substituents on the Pc skeleton is at most 4.

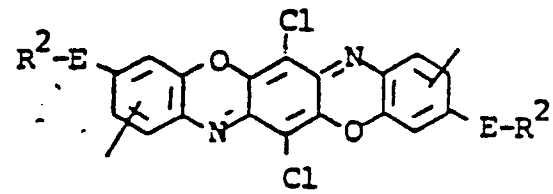

(q)

wherein

E = NH, O or S and

$R^2$ = optionally substituted $C_1$-$C_4$-alkyl, phenyl or naphthyl.

6. Use of reactive dyestuffs according to Claim 1) to 4) for dyeing or printing hydroxyl- or amide-group-containing textile material.

7. Hydroxyl- or amide-group-containing textile material dyed or printed with dyestuffs according to Claim 1) to 4).

**Revendications**

1. Colorants réactifs de formule générale

$$[A]-(B)-X-CH_2-CH_2-\underset{R}{N}-Z \qquad (1)$$

dans laquelle

A = reste d'un colorant organique des séries monoazoïques ou polyazoïques, azoïques complexes métalliques, anthraquinoniques, de phtalocyanines, de formazanes, de dioxazines, de xanthènes ou de phénazines,

B = liaison directe entre A et X ou pont,

X = S, SO ou $SO_2$,

R = H, alkyle en $C_1$-$C_4$ éventuellement substitué, alcényle en $C_2$-$C_6$ éventuellement substitué ou reste de benzylamine éventuellement substitué,

Z = reste fluoré réactif avec les fibres.

2. Colorants réactifs selon la revendication 1, caractérisés en ce que B représente une liaison directe entre A et X ou un pont de structure (2) à (5):

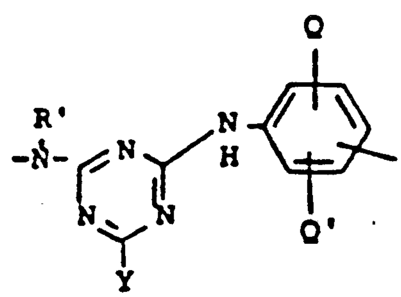

(2)

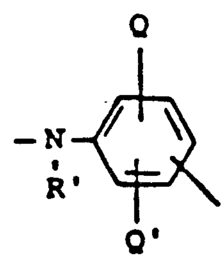

(3)

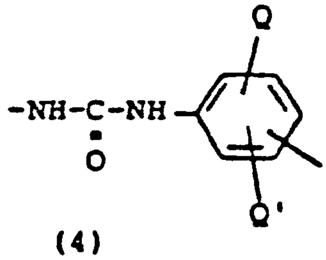

(4)

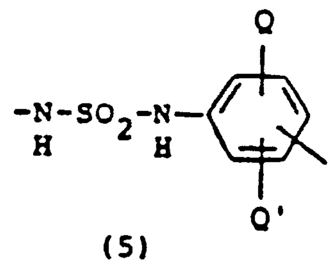

(5)

la fonction amino des formules (2) à 5) étant dans chaque cas reliée à un atome de carbone d'un noyau aromatique carbocyclique ou hétérocyclique aromatique du chromophore A et avec la fonction libre du système phényle de X, les symboles utilisés dans les formules (2) à (5) ayant les significations suivantes:

R' = H, alkyle éventuellement substitué ou aryle éventuellement substitué,

Y = OH, Cl, F, mercaptyle en $C_1$-$C_4$ éventuellement substitué, alcoxy en $C_1$-$C_4$ éventuellement substitué, $SO_3H$, NHR',

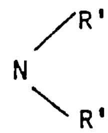

ou phénoxy éventuellement substitué,

Q et Q' = indépendamment l'un de l'autre, H, OH, un halogène, $SO_3H$, COOH, alkyle en $C_1$-$C_4$ éventuellement substitué, alcoxy en $C_1$-$C_4$ éventuellement substitué,

les symboles A, X, R et Z ayant les significations indiquées dans la revendication 1.

3. Colorants réactifs selon les revendications 1 à 2, caractérisés en ce que X représente $SO_2$ et les autres symboles A, B, R et Z ont les significations indiquées dans les revendications 1 à 2.

4. Colorants réactifs selon les revendications 1 à 3, de formule

$$[K-N=N-D]-(B)-X-CH_2CH_2-\underset{R}{N}-Z \qquad (8)$$

dans laquelle

K = reste d'un copulant de la série benzénique, naphtalénique ou hétérocylique, et

D = reste d'un composant diazotable de la série benzénique ou naphtalénique, B, X, R et Z ayant les significations indiquées dans les revendications 1 à 3.

5. Colorants réactifs des revendications 1 à 3, dans lesquels

A =

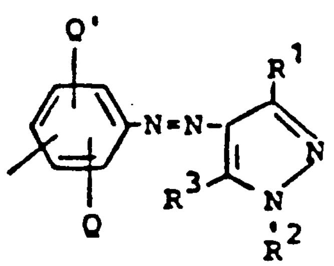

(a)

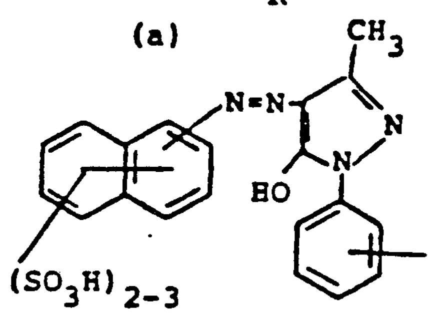

(b)

avec
$R^1 = CH_3$, COOH, COO-(alkyle en $C_1$-$C_4$), $CONH_2$,
$R^2 = H$, alkyle éventuellement substitué, aryle éventuellement substitué,
$R^3 = OH$ ou $NH_2$

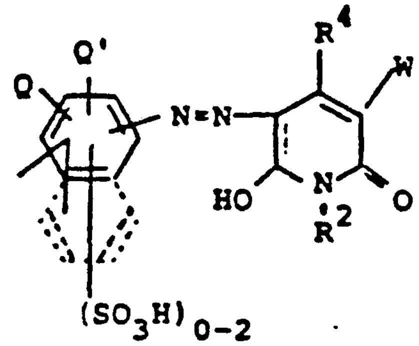

(c)

$R^4 = H$, $CH_3$, COOH, $CH_2$-$SO_3H$,
W = H, CN, $CONH_2$, $SO_3H$, $SO_2CH_3$, $CH_2$-$SO_3H$, $CH_2$-$CO_2H$, halogène, alkyle en $C_1$-$C_3$;

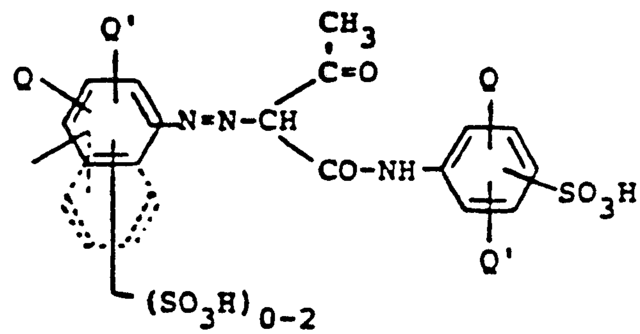

(d)

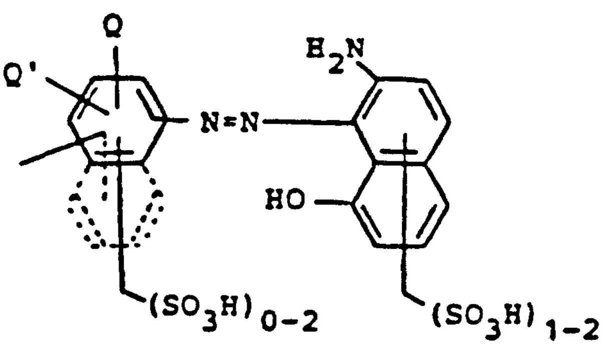

(e)

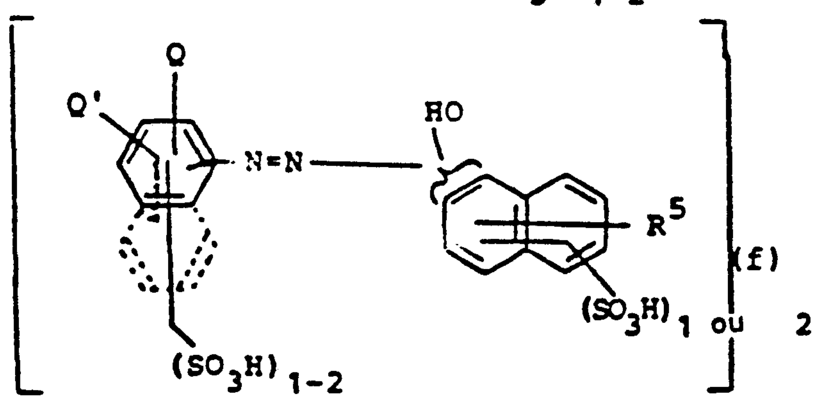

(f)

$R^5$ = H, Cl, Br, alcoxy, OH, amino éventuellement substitué,

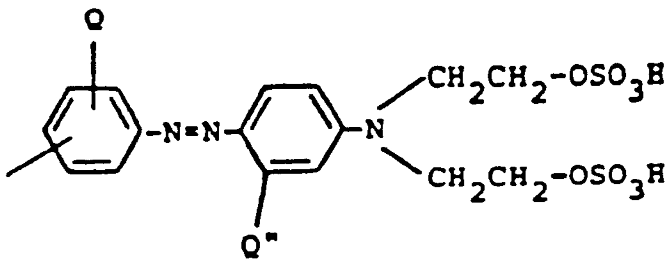

(g)

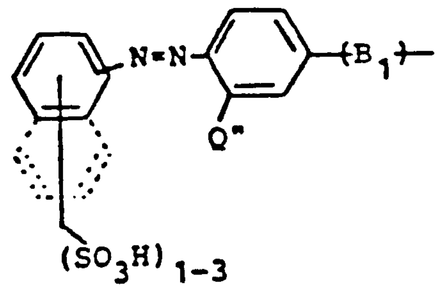

(h)

Q″ = H, $CH_3$, $NHCOCH_3$, $NHCONH_2$, $NHSO_2.CH_3$ et $B_1$ représente un pont

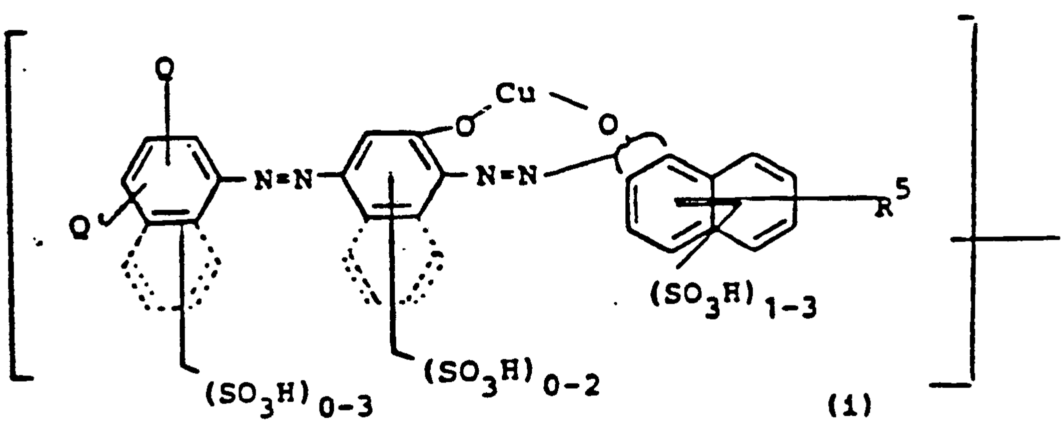

(i)

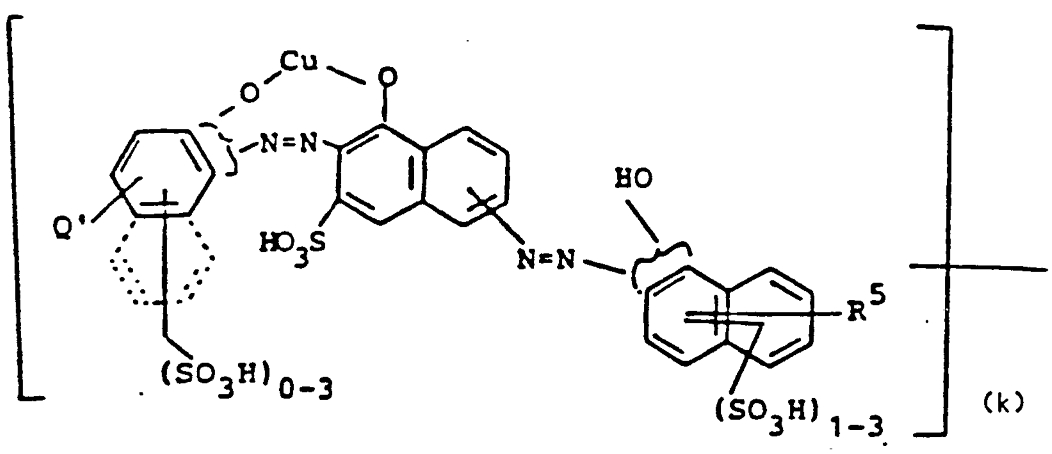

(k)

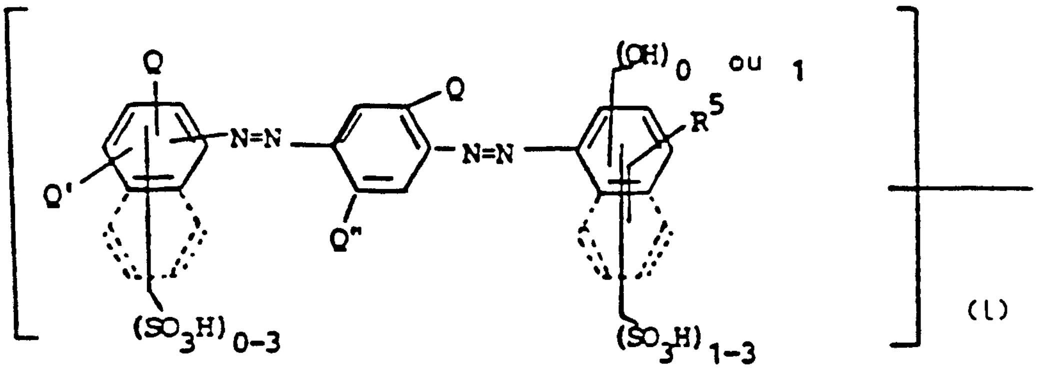

(l)

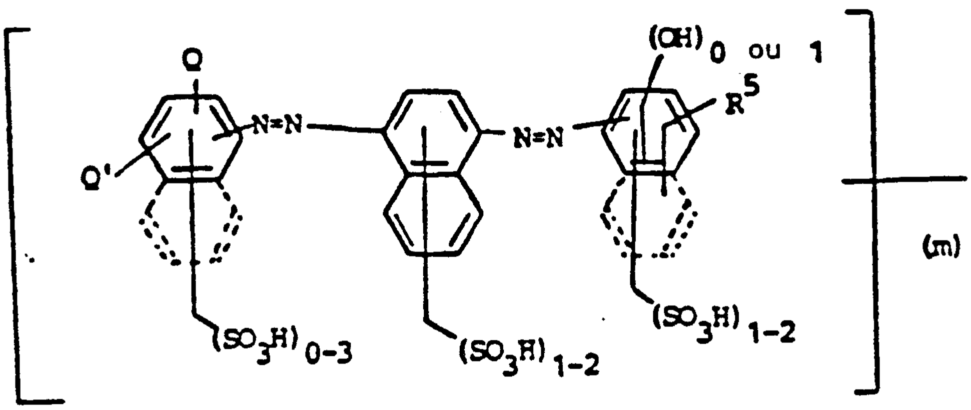

(m)

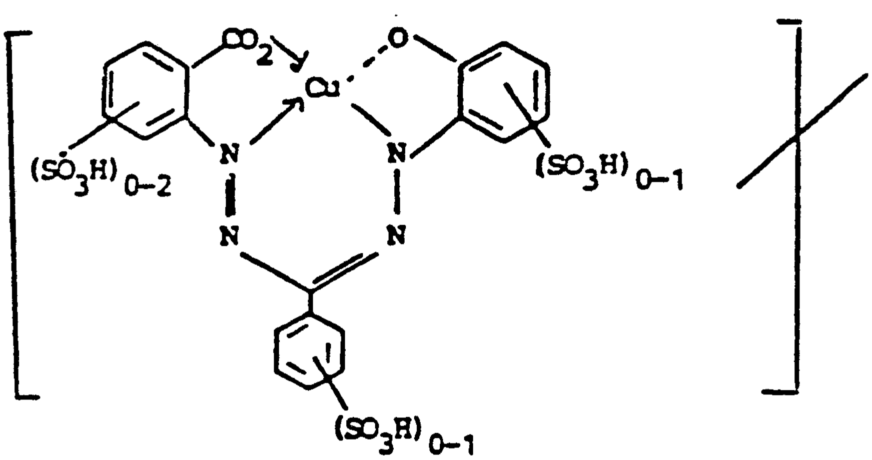

(n)

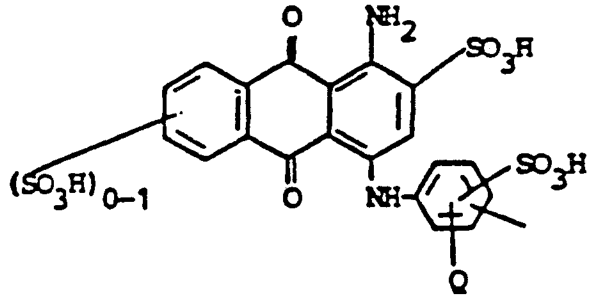

(o)

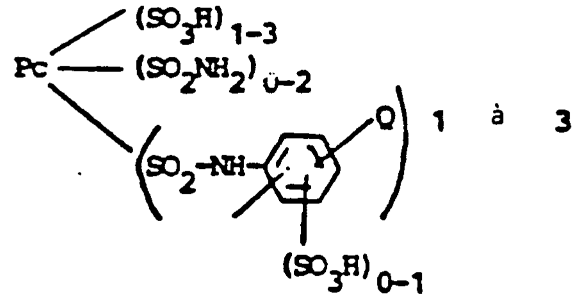

(p)

Pc = reste de phtalocyanine de $Cu^{+2}$ ou de $Ni^{+2}$, le nombre total des substituants du squelette de Pc étant au maximum de 4.

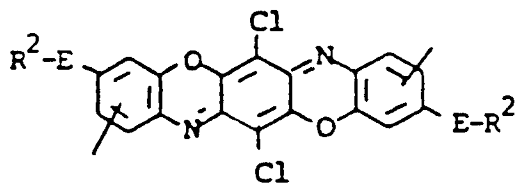

(q)

dans laquelle

E = NH, O, S

$R^2$ = alkyle en $C_1$-$C_4$ éventuellement substitué, phényle ou naphtyle.

6. Utilisation des colorants réactifs selon les revendications 1 à 4 pour la teinture ou l'impression de matières textiles contenant des groupes hydroxy ou amide.

7. Matières textiles contenant des groupes hydroxy ou amide, teintes ou imprimées à l'aide de colorants selon les revendications 1 à 4.